(19) **Europäisches Patentamt / European Patent Office / Office européen des brevets**

(11) **EP 2 581 285 B1**

(12) **EUROPEAN PATENT SPECIFICATION**

(45) Date of publication and mention
of the grant of the patent:
**13.03.2019 Bulletin 2019/11**

(51) Int Cl.:
**B60W 30/18** *(2012.01)*    **F02N 11/08** *(2006.01)*
**B60W 30/192** *(2012.01)*    **B60W 10/06** *(2006.01)*

(21) Application number: **12186845.9**

(22) Date of filing: **01.10.2012**

(54) **ENGINE START-UP CONTROLLER**

MOTORSTART-STEUERGERÄT

CONTRÔLEUR DE DÉMARRAGE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2011   JP 2011225228**
**12.10.2011   JP 2011225229**

(43) Date of publication of application:
**17.04.2013   Bulletin 2013/16**

(73) Proprietor: **Mitsubishi Jidosha Kogyo K.K.**
**Tokyo 108-8410 (JP)**

(72) Inventors:
• **Shibata, Koji**
**Tokyo, Tokyo 108-8410 (JP)**
• **Ueda, Katsunori**
**Tokyo, Tokyo 108-8410 (JP)**
• **Miyata, Toshiyuki**
**Tokyo, Tokyo 108-8410 (JP)**

(74) Representative: **Vossius & Partner**
**Patentanwälte Rechtsanwälte mbB**
**Siebertstrasse 3**
**81675 München (DE)**

(56) References cited:
**EP-A1- 1 209 354      EP-A1- 2 063 088**
**JP-A- 2004 324 531    JP-A- 2009 209 940**
**US-A1- 2004 231 627**

EP 2 581 285 B1

**Description**

FIELD

The present invention relates to a start-up controller that controls the rotation rate of the engine at start-up.

BACKGROUND

Conventional idle-stop systems are known that automatically stop or restart engines in accordance with the traveling state of vehicles. A typical idle-stop system performs control (idle-stop control, auto-stop control) that automatically stops the engine by interrupting the fuel supply when the engine starts to idle, for example, at a stoplight. If an intention of start moving of a driver (start intention), such as an acceleration operation, is detected, the engine automatically restarts (auto-restart control). Nowadays, such control is applied to various vehicle engines, regardless of the types of vehicles and combustion systems of the engines.

In a typical engine, the rotation rate of the engine (engine speed) in an idling mode is controlled to equal to a criterial idling speed. Such control of the rotation rate of the engine (idling control) is applied in a usual idling state after start-up of the engine, as well as an idling state after auto-restart.

For example, Japanese Laid-open Patent Publication No. 2006-152965 describes an idle-stop system installed in an engine mounted in a scooter-type motor cycle. Such a system controls the fuel injection rate, ignition timing, and other factors by controlling the rotation rate of the engine in an idling state after restart such that the rotation rate of the engine equals a criterial value (idling determination rotation rate). Japanese Laid-open Patent Publication No. 2000-274273 describes fuel injection control for achieving a certain idling speed by setting the idling speed (for example, 800 [rpm] or lower) as a target rotation rate of the engine at restart.

A surge air tank immediately after start-up of an engine is filled with air under pressure substantially equal to the atmosphere pressure. Thus, the cylinder intake rate temporarily increases immediately after the start-up of the engine. Hence, even if the idling speed is appropriately set, the actual rotation rate of the engine may instantaneously exceed the idling speed significantly, for a very short time. Such revving-up of the engine causes an increase in the absolute exhaust rate and might impair the exhaust performance in a cold state and fuel efficiency.

At normal start-up of the engine, power transmission from the crank shaft of the engine to the driving shaft of the vehicle is often blocked. In contrast, at restart by auto-restart control in an idle-stop mode, the crank shaft and the driving shaft may be connected. For example, as described in Japanese Laid-open Patent Publication No. 2000-274273, a vehicle including a transmission equipped with a torque converter may maintain the gear position (position of the shift lever) when the engine stops by idle-stop control. If the engine restarts with the gear position in the same position, engine torque amplified by the torque converter is transmitted to the transmission, and high torque is input to the gear immediately after start-up of the engine due to revving-up. Thus, instantaneous acceleration not intended by the driver (start-up acceleration) and torque shock may occur.

The revving-up of the engine may be suppressed by reducing the fuel injection rate and the air intake rate immediately after start-up, but in such a case, the start-up performance of the engine is impaired.

With conventional engine control, it is difficult to appropriately suppress the revving-up of the engine that might occur immediately after start-up, while improving the start-up performance of the engine.

The torque generated at the engine fluctuates in accordance with the start-up condition of the vehicle, as well as the operation by the driver. Thus, when the fuel injection rate and the air intake rate are decreased to suppress the revving-up, the minimum torque to start the vehicle might not be achieved. That is, the control for suppressing the revving-up at start-up may interfere with the control for improving the start-up performance and the starting ability of the engine, and thus, the requested actual rotation rate and torque may not be guaranteed.

With conventional engine control, it is difficult to appropriately suppress the revving-up of the engine that might occur immediately after start-up, while improving the start-up performance of the engine. In particular, it is troublesome to control the engine output appropriately because both torque shock suppression and quick engine restart are one of the main objectives to be achieved for auto-restart control in an idle-stop mode.

JP 2004 324531 A describes a warm-up controller for an engine that increases opportunities for performing a warm-up control and promotes the heating by a heater to obtain a sufficient heating effect.

SUMMARY

TECHNICAL PROBLEMS

An object of the embodiment, which has been conceived in light of the problems described above, is to provide an engine start-up controller that suppresses revving-up of the engine at start-up and improves the start-up performance.

Another object of the embodiment is to achieve advantageous effects that cannot be achieved through the traditional art by employing the configurations described below.

SOLUTION TO PROBLEMS

(1) A start-up controller of an engine transmitting a driving force to a wheel of a vehicle via an automatic transmission installed in the vehicle and includes a shift-position detector that detects whether a position of a select lever of the automatic transmission is in a driving range.
The start-up controller further includes a first setter that determines (sets) a limit rotation rate based on the position detected by the shift-position detector at start-up of the engine as a limit of a rotation rate of the engine, the limit rotation rate being lower (smaller) when the position is in the driving range compared to when the position is not in the driving range. The start-up controller further includes a limit controller that performs limit control for controlling an actual rotation rate of the engine such that the actual rotation rate does not exceed the limit rotation rate determined by the first setter.
(2) The start-up controller preferably includes a second setter that determines (sets) a target idle rotation rate for idling of the engine. The first setter determines the limit rotation rate higher than or equal to the target idle rotation rate determined by the second setter.
In such a case, the limit rotation rate of when the position is in the driving range is closer to the target idle rotation rate than the limit rotation rate of when the position is not in the driving range.
(3) The start-up controller preferably includes an idling controller that performs idle feedback control for converging (for stabilizing) the actual rotation rate of the engine to the target idle rotation rate when a gradient of the actual rotation rate of the engine equals or falls below zero. The limit control may be performed together with idling control, or the limit control may be finished when the idling control is to be started. The "idle feedback control" is also called "feedback idle speed control".
(4) The engine start-up controller includes an intention detector that detects an intensity of an intention of a driver to start the vehicle, wherein the first setter preferably determines the limit rotation rate lower, as a limit of the rotation rate of the engine, for the weaker start intention detected by the intention detector.
(5) The intention detector preferably detects the intensity of the start intention based on braking operation by the driver.
(6) The intention detector preferably detects the intensity of the start intention based on acceleration operation by the driver.
(7) The first setter preferably determines the limit rotation rate based on a coolant temperature of the engine.
(8) The limit controller preferably decreases a target value of a rate of change in the actual rotation rate as a difference between the actual rotation rate of the engine and the limit rotation rate decreases.
Here, "difference" refers to a value obtained by subtracting the limit rotation rate from the actual rotation rate.
(9) The start-up controller preferably includes an offset setter that determines (sets) an offset of the rotation rate of the engine based on a coolant temperature of the engine at start-up wherein the limit controller determines, as a start condition of the limit control, whether the actual rotation rate of the engine is higher than or equal to a rotation rate equaling a difference between the limit rotation rate and the offset.
(10) The start-up controller preferably includes an air-flow sensor that detects a flow rate of air flowing through an intake pipe of the engine wherein the limit controller preferably determines, as an end condition of the limit control, whether an estimated value of a cylinder intake rate of air taken in a cylinder equals an air intake rate calculated based on the flow rate detected by the air-flow sensor.
(11) The start-up controller preferably performs torque-based control by converting various output requests to the engine mounted in the vehicle to torque and controlling at least one of an air intake rate, a fuel injection rate, and ignition timing based on combined target torque.
In such a case, the start-up controller preferably includes a limit-gradient calculator that calculates a limit gradient of a rate of change of the actual rotation rate in accordance with a difference between the actual rotation rate of the engine and the limit rotation rate; and a gradient-difference calculator that calculates a gradient difference corresponding to a difference between the limit gradient calculated by the limit-gradient calculator and the rate of change of the actual rotation rate.
The limit controller preferably performs the limit control based on the target torque calculated based on a value obtained by converting the gradient difference calculated by the gradient-difference calculator to torque.
(12) The first setter preferably determines a minimum value of the limit rotation rate based on the start intention detected by the intention detector.

ADVANTAGEOUS EFFECTS

The start-up controller according to the embodiment can prevent a sudden increase in the rotation rate of the engine (revving-up) that would occur immediately after start-up of the engine and reduce unintentional acceleration by setting a low limit rotation rate for a non-traveling range, while controlling the actual rotation rate of the engine so as not t when the select lever is at a driving position. Since the target value of the actual rotation rate is not controlled, the engine can be quickly started, and the start-up performance is improved.

**BRIEF DESCRIPTION OF DRAWINGS**

The nature of this invention, as well as other objects and advantages thereof, will be explained in the following with reference to the accompanying drawings, in which like reference characters designate the same or similar parts throughout the figures and wherein:

Fig. 1 illustrates the block configuration of an engine start-up controller according to an embodiment and the configuration of an engine having the start-up controller.
Fig. 2 is a block diagram illustrating the calculation performed by a demand-torque calculator of the start-up controller.
Fig. 3 is a block diagram illustrating the calculation performed by a limit-torque calculator of the start-up controller.
Fig. 4 is a block diagram illustrating the procedures of determining the limit rotation rate by the limit-rotation-rate setter illustrated in Fig. 3.
Figs. 5A to 5E are graphs associated with the calculation by the limit-torque calculator of the start-up controller.

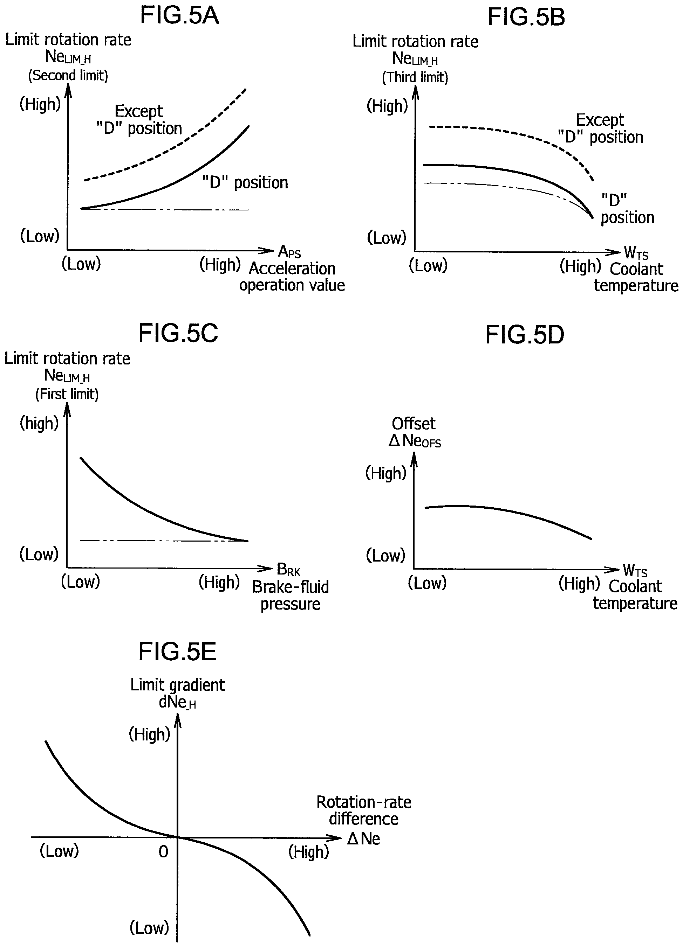

Fig. 5A illustrates the relationship among the limit rotation rate, the shift position of the select lever, and the acceleration operation value.
Fig. 5B illustrates the relationship among the limit rotation rate, the shift position of the select lever, and coolant temperature.
Fig. 5C illustrates the relationship between the limit rotation rate and the brake-fluid pressure.
Fig. 5D illustrates the relationship between the coolant temperature and an offset.
Fig. 5E illustrates the relationship between the rotation rate difference and limit gradient.

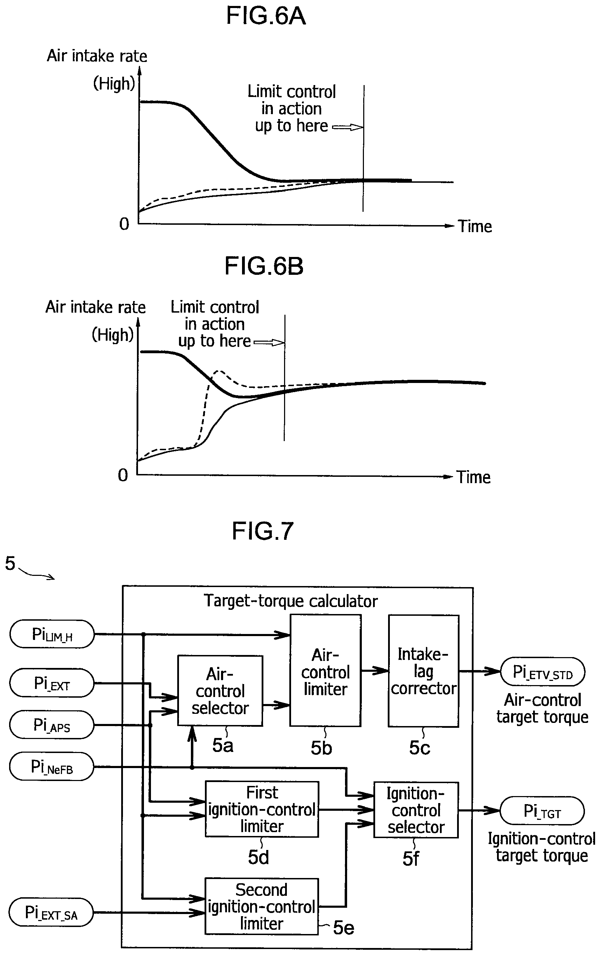

Figs. 6A and 6B are graphs describing one of the end conditions of the limit control of the start-up controller.
Fig. 6A corresponds to a case in which acceleration operation is not performed.
Fig. 6B corresponds to a case in which acceleration operation is performed.
Fig. 7 is a block diagram illustrating the calculation process of a target-torque calculator of the start-up controller.

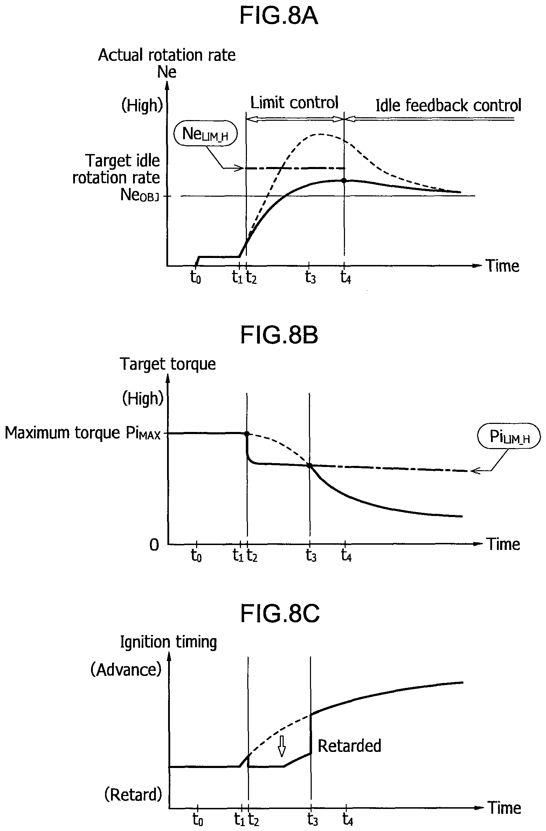

Figs. 8A to 8C illustrate the operation of the start-up controller.
Fig. 8A is a graph exemplifying the fluctuation in the actual rotation rate when limit control is performed during restart in an idle-stop mode.
Fig. 8B is a graph depicting the fluctuation in the target torque.
Fig. 8C is a graph depicting the fluctuation in the ignition timing.

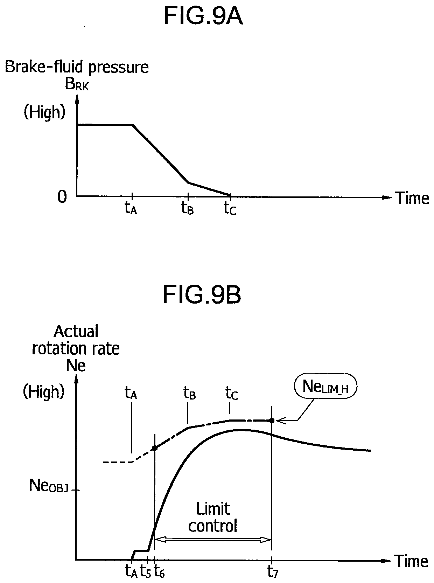

Figs. 9A and 9B illustrate the operation of the start-up controller.
Fig. 9A is a graph exemplifying the fluctuation in the brake-fluid pressure.
Fig. 9B is a graph exemplifying the fluctuation in the actual rotation rate.

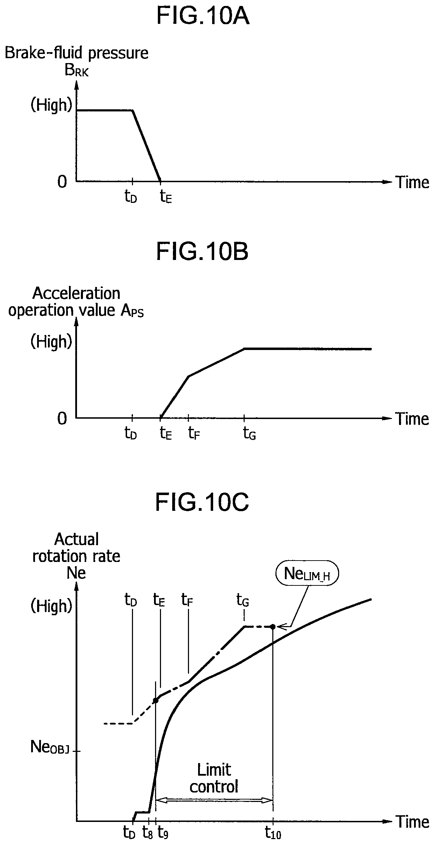

Figs. 10A to 10C illustrate the operation of the start-up controller.
Fig. 10A is a graph exemplifying the fluctuation in the braking operation value.
Fig. 10B is a graph exemplifying the fluctuation in the acceleration operation value.
Fig. 10C is a graph exemplifying the fluctuation in the actual rotation rate.

**DESCRIPTION OF EMBODIMENTS**

An engine start-up controller will now be described with reference to the accompanying drawings. The embodiments described below are merely examples, and various modifications and technological applications that are not described in the embodiments are not to be excluded from scope of the invention. The configurations according to the embodiments may be modified in various ways without departing from the scope of the embodiment. Such configurations may also be selected and/or be combined appropriately.

**[1. Hardware Configuration]**

**[1-1. Powertrain]**

An engine start-up controller according to this embodiment is applied to the vehicle engine 10 illustrated in Fig.

1. The power of the engine 10 is transmitted to a drive wheel 27 of the vehicle via an automatic transmission (AT) unit 26. The AT unit 26 accommodates a torque converter 26a and a transmission mechanism 26b.

The torque converter 26a is a type of power transmission device that transmits the rotation of the engine 10 to the transmission mechanism 26b via a fluid while increasing the torque. A typical torque converter 26a has a sealed casing that accommodates a working fluid and three different types of impellers, i.e., a pump impeller, a turbine liner, and a stator. The rotary shaft of the pump impeller (input shaft of the torque converter 26a) is connected to the output shaft of the engine 10, and the rotary shaft of the turbine liner (output shaft of the torque converter 26a) is connected to the transmission mechanism 26b. The stator is interposed between the pump impeller and the turbine liner, which oppose each other, and is fixed to the casing.

The working fluid of the torque converter 26a circulates in the casing, while transmitting the torque from the pump impeller to the turbine liner and the stator. In general, high torque is applied to the stator if the difference in the rotation rates between the pump impeller and the turbine liner is large. The torque received by the turbine liner equals the sum of the torque applied to the pump impeller and the torque applied to the stator. Thus, the torque transmitted to the transmission mechanism 26b is amplified to a level higher than the torque from the engine 10 when the rotation rate of the output shaft of the torque converter 26a is lower than the rotation rate of the input shaft.

The transmission mechanism 26b is a type of power transmission device that reduces the rotation rate from the torque converter 26a and transmits the reduced rotation rate to a drive wheel 27. The transmission mechanism 26b may be any mechanism, for example, a planetary gear mechanism, a continuously variable transmission (CVT) mechanism, or a clutch/brake mechanism.

A planetary gear mechanism is a transmission mechanism having a sun gear and a plurality of planet gears disposed inside an outer ring gear, the center axes of the planet gears being connected to each other with a planetary carrier. If the transmission mechanism 26b is a planetary gear mechanism, different gear ratios are achieved by controlling the rotation of the three rotating elements, i.e., the outer ring gear, the sun gear, and the planetary carrier.

A CVT mechanism is a transmission mechanism that can continuously vary the rotational rate. When it comes to a belt CVT mechanism that transmits power via a belt suspended across the conical surfaces of two pulleys, a stepless gear ratio is achieved by moving the positions of the belt on the conical surfaces of the pulleys.

A clutch/brake mechanism stops power transmission by controlling the friction force generated between opposing frictionally engaged elements or by limiting the movement of the frictionally engaged elements. For example, when a gear is changed in the planetary gear mechanism or when the vehicle is in park, the clutch/brake mechanism is set to a disengaged/fixed state, interrupting the transmission of the driving force to the drive wheel 27.

The gear ratio of the transmission mechanism 26b is changed depending on the shift position of the select lever installed in the vehicle interior. In this embodiment, the shift lever has four shift positions: parking (P), reverse (R), neutral (N), and drive (D).

The P and N positions are selected when the vehicle is not moving, and is also referred to as "non-driving positions (ranges) ". Meanwhile, the D position is referred to as "driving position". The R position is selected to move the vehicle backward and, in a broad sense, is a driving position.

### [1-2. Cylinder]

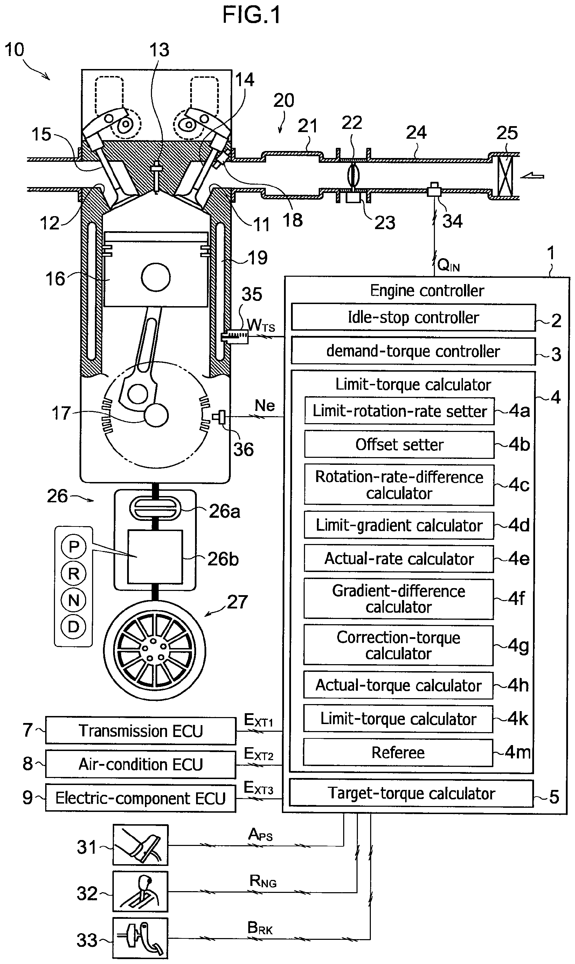

The cylinder structure of the engine 10 will now be described. Fig. 1 illustrates one of the cylinders installed in the multi-cylinder engine 10. The piston 16 that reciprocates inside the cylinder is connected to a crankshaft 17 via a connecting rod. The crankshaft 17 is an output shaft connected to the pump impeller of the torque converter 26a.

A spark plug 13 is mounted on the ceiling plane (at the apex) of the cylinder such that the tip of the spark plug 13 protrudes into the combustion chamber. An intake port 11 and an exhaust port 12 are provided on the top surface, on the cylinder head side, of the combustion chamber.

An intake valve 14 that opens/closes the opening to the intake port 11 and an exhaust valve 15 that opens/closes the opening to the exhaust port 12 are provided on the top surface of the combustion chamber. The opening/closing operation of the intake valve 14 establishes/releases the communication between the intake port 11 and the combustion chamber while the opening/closing operation of the exhaust valve 15 establishes/releases the communication between the exhaust port 12 and the combustion chamber.

The upper end of the intake valve 14 and the upper end of the exhaust valve 15 are connected to respective rocker arms in the variable valve mechanism (not illustrated) . Each rocker arm is a rocking member that is supported on a rocker shaft. The intake valve 14 and the exhaust valve 15 reciprocate vertically (up and down) as a result of the rocking of the respective rocker arms. The variable valve mechanism controls the maximum valve lift and the valve timing of the intake valve 14 and the exhaust valve 15 separately or cooperatively.

An engine coolant flows in a water jacket 19 wrapping around the cylinder. The engine coolant cools the engine 10 while it is circulating an annular coolant circuit connecting the water jacket 19 and the radiator.

**[1-3. Intake System]**

An injector 18 that jets fuel is disposed inside the intake port 11. The amount of fuel jet from the injector 18 is electronically controlled by an engine controller 1, which is described below. An intake manifold 20 is disposed upstream of the injector 18 in the intake stream. The intake manifold 20 has a surge air tank 21 for temporarily storing air to be sent to the intake port 11. The intake manifold 20 branches at the surge air tank 21 to the intake ports 11 of the cylinders. The surge air tank 21 is positioned at the branching point. The surge air tank 21 alleviates intake pulsation and intake interference that might occur in the cylinders.

A throttle body 22 is connected to the intake manifold 20 on the upstream side. An electronically controlled throttle valve 23 is installed inside the throttle body 22. The flow rate of the air flowing to the intake manifold 20 is controlled by adjusting the opening (throttle opening) of the throttle valve 23. The throttle opening is electronically controlled by the engine controller 1.

An intake pipe 24 is connected to the throttle body 22 on upstream side. An air filter 25 is installed at the upstream side of the intake pipe 24. Intake air filtered through the air filter 25 is supplied to the cylinders of the engine 10 through the intake pipe 24 and the intake manifold 20.

**[1-4. Detection System]**

An accelerator-pedal sensor 31 and a brake-fluid pressure sensor 33 are installed at appropriate positions in the vehicle. The accelerator-pedal sensor 31 detects the amount by which the accelerator pedal is depressed (acceleration operation value $A_{PS}$), and the brake-fluid pressure sensor 33 detects the brake-fluid pressure $B_{RK}$ corresponding to the braking operation value. The acceleration operation value $A_{PS}$ is a parameter representing an acceleration request and start intention or, in other words, is a parameter correlated with the load on the engine 10 (power output request to the engine 10). The brake-fluid pressure $B_{RK}$ during normal drive of the vehicle is a parameter representing a stop request from the driver, as well as a parameter representing a start request for creeping forward. The information on the acceleration operation value $A_{PS}$ and the brake-fluid pressure $B_{RK}$ detected at the sensors 31 and 33, respectively, is transmitted to the engine controller 1.

A shift-position sensor 32 (shift-position detector) is attached to the select lever of the AT unit 26. The shift-position sensor 32 detects the shift position of the select lever and outputs a range signal $R_{NG}$ corresponding to the detected shift position. The range signal $R_{NG}$, which corresponds to one of the P, R, N and D positions of the shift lever, is sent to the engine controller 1.

An air-flow sensor 34 that detects the air intake rate $Q_{IN}$ is installed in the intake pipe 24. The air intake rate $Q_{IN}$ is a parameter representing the actual flow rate of air passing through the throttle valve 23. A lag in the intake flow from the throttle valve 23 to the cylinders (due to flow resistance and/or inertia) may cause a difference between the flow rate of air guided to the cylinders and the flow rate of air passing through the throttle valve 23 at a given time. Thus, the engine controller 1 according to this embodiment controls the air intake rate in consideration of such a lag in the intake flow. The information on the air intake rate $Q_{IN}$ detected by the air-flow sensor 34 is sent to the engine controller 1.

A coolant temperature sensor 35 that detects the temperature of the engine coolant (coolant temperature $W_{TS}$) is mounted on the water jacket 19 or at any position in the coolant circuit. The no-load loss of the engine 10 (intrinsic mechanical loss of the engine 10) is large when the temperature of the engine 10 is low, for example, at cold start. The temperature of the engine 10 is reflected in the coolant temperature $W_{TS}$ in the water jacket 19. Hence, in this embodiment, the coolant temperature $W_{TS}$ is used as an index to estimate the no-load loss of the engine 10. The information on the coolant temperature $W_{TS}$ detected at the coolant temperature sensor 35 is sent to the engine controller 1.

A rotation-rate sensor 36 that detects the rotation angle $\theta_{CR}$ of the crankshaft 17 is mounted on the crankshaft 17. The change in the rotation angle $\theta_{CR}$ per unit time (angular velocity $\omega$) is proportional to the actual rotation rate Ne (actual revolutions per unit time) of the engine 10. Thus, the rotation-rate sensor 36 can acquire the actual rotation rate Ne of the engine 10. The information on the acquired actual rotation rate Ne is sent to the engine controller 1. The actual rotation rate Ne may be calculated at the engine controller 1 on the basis of the rotation angle $\theta_{CR}$ detected by the rotation-rate sensor 36.

**[1-5. Control System]**

Other electronic controllers installed in the vehicle in addition to the engine controller 1 (engine electronic control unit (ECU), start-up controller) include a transmission ECU 7, an air-condition ECU 8, and an electric-component ECU 9. These electronic controllers are composed of, for example, microprocessors, LSI devices with integrated ROMs and RAMs, and embedded electronic devices. These electronic controllers are connected with each other via communication lines of an in-vehicle network installed in the vehicle.

The transmission ECU 7 controls the shifting of the AT unit 26. The air-condition ECU 8 controls the operation of the air conditioner (not illustrated). The electric-component ECU 9 controls the operation of electric components installed on the body such as vehicle floodlights, lighting equipments, a power steering system, electric windows, and door locks. The operation of these devices applies loads on the engine 10.

Hereinafter, the electronic controllers other than the engine controller 1 are referred to as "external control systems", and the devices controlled by these external control systems are referred to as "external load devices". The operating conditions of the external load devices are variable regardless of the operating status of the engine 10. Hence, the external control systems calculate the torque to be supplied from the engine 10 to the external load devices and send this information to the engine controller 1.

The torque to be supplied from the engine 10 to an external load device is referred to as "externally demand torque". The values of the externally demand torque may be calculated at the individual external control systems, such as the transmission ECU 7, the air-condition ECU 8, and the electric-component ECU 9, and then sent to the engine controller 1 or, otherwise, the engine controller 1 may calculate the externally demand torque based on information collected from the external control systems.

The engine controller 1 is an electronic controller that controls a wide variety of systems associated with the engine 10, such as the ignition system, the fuel system, the intake/exhaust system, and the valve system, and controls the rate of air flow to the cylinders in the engine 10, the fuel injection rate, and ignition timing. The engine controller 1 performs torque-based control with reference to the torque to be supplied from the engine 10. Specifically, the engine controller 1 controls, for example, the amount and timing of fuel jet from the injector 18, the ignition timing of the spark plug 13, and the opening of the throttle valve 23.

The torque-based control presumes three types of demand torque as torque to be supplied from the engine 10. First demand torque is issued in response to an acceleration request from the driver. Second demand torque is issued by external load devices. The first demand torque and second demand torque are calculated on the basis of the loads applied to the engine 10. Third demand torque is issued for idle feedback control (idling control) of maintaining the actual rotation rate Ne of the engine 10 at the idle rotation rate and is important even in a no-load state in which a load is not applied to the engine 10. The engine controller 1 automatically switches among the three types of demand torque depending on the operating status of the engine 10 while calculating the target torque that is outputted from the engine 10 and controlling the amount and timing of fuel injection, the air intake rate, and the ignition timing to achieve the target torque.

The engine controller 1 performs auto-stop control (idle-stop control) and auto-restart control of automatically stopping and restarting the engine 10 in accordance with the traveling state of the vehicle. Auto-stop control is a function to automatically stop the engine 10 while the ignition key switch is maintained at the ON position, if criterial auto-stop conditions are satisfied during operation of the engine 10. Auto-restart control is a function to automatically restart the engine 10, if criterial auto-restart conditions are satisfied while the engine 10 is stopped by the auto-stop control.

Calculation of the target torque during torque-based auto-restart control performed by the engine controller 1 will now be described in detail. In this embodiment, torque is represented by indicated mean effective pressure Pi (pressure derived from dividing work calculated from a pressure diagram of the engine 10 by the displacement) . In other words, in this embodiment, the term "torque" refers not only to the moment of force generated at the engine 10 but also, for descriptive purposes, to a torque equivalent value (pressure corresponding to torque) defined by mean effective pressure acting upon a piston 16 of the engine 10 (for example, indicated mean effective pressure Pi or net mean effective pressure Pe).

**[2. Control Architecture]**

As illustrated in Fig. 1, the various sensors, the in-vehicle communication networks, and other electronic controllers, which are described above, are connected to the input terminals of the engine controller 1. The spark plug 13, the injector 18, the throttle valve 23, and other devices, which are torque-based controlled, are connected to the output terminals of the engine controller 1.

The engine controller 1 includes an idle-stop controller 2, a demand-torque calculator 3, a limit-torque calculator 4, and a target-torque calculator 5. The functions of the idle-stop controller 2, the demand-torque calculator 3, the limit-torque calculator 4, and the target-torque calculator 5 may be achieved through electronic circuits (hardware) or through program software or, otherwise, may be achieved partly through hardware and partly through software.

**[2-1. Idle-stop Controller]**

The idle-stop controller 2 controls the auto-stop and the auto-restart based on the conditions on the auto-stop control and the auto-restart control. Auto-stop is performed, for example, if all of following Conditions 1 to 5 hold (if all of following Conditions 1 to 5 is fulfilled). Typical auto-stop control starts if criterial idle-stop conditions are satisfied in addition to at least criterial idling conditions associated with the vehicle speed and acceleration operation value $A_{PS}$.

Similarly, among the following Conditions 1 to 5 for auto-stop control according to this embodiment, Conditions 1, 3, and 5 are idling conditions (conditions that hold if the engine is idling). Conditions 1 to 5 are as follows:

Condition 1: The select lever is at the P, N, or D position;
Condition 2: The coolant temperature $W_{TS}$ is higher than or equal to a criterial temperature (the engine 10 is warmed up);
Condition 3: The acceleration operation value $A_{PS}$ is zero (the accelerator pedal is not depressed);
Condition 4: The brake-fluid pressure $B_{RK}$ is higher than or equal to a criterial value (the accelerator pedal is depressed); and
Condition 5: The vehicle is stopped (the vehicle speed is zero).

Auto-restart is performed, for example, if any one of the following Conditions 6 to 10 holds:

Condition 6: The select lever is at the R position;
Condition 7: The acceleration operation value $A_{PS}$ is not zero (the accelerator pedal is depressed);
Condition 8: The brake-fluid pressure $B_{RK}$ is lower than a criterial value (the accelerator pedal is depressed);
Condition 9: The vehicle is not stopped (the vehicle speed is not zero); and
Condition 10: A start request is sent from an external load device.

Specific examples of Condition 10 include a case in which the electricity level requested by the electric components is not enough to keep up with demand while automatically stopped due to, for example, a reduction in the battery charge level or a reduction in the battery voltage (i.e., when power generation is performed) or a case in which the engine 10 is started up to drive the compressor of the air-conditioner. Hence, depending on the external load, auto-restart control of the engine 10 is performed even if none of Conditions 6 to 9 holds. Thus, the select lever is not necessarily set to the R position at restart of the engine 10 as defined in Condition 6; the engine 10 may be restarted with the select lever at the N or D position. The acceleration operation value $A_{PS}$ and the brake-fluid pressure $B_{RK}$ may be any value at restart of the engine 10.

If the auto-stop conditions are satisfied, the idle-stop controller 2 performs auto-stop control to stop the engine 10 by, for example, controlling the injector 18 to stop the fuel supply. If a restart condition is satisfied while the engine 10 is automatically stopped as a result of auto-stop control, the idle-stop controller 2 performs auto-restart control to restart the engine 10 by, for example, driving a cell motor (starter, not illustrated) and restarting the fuel supply.

**[2-2. Demand-Torque Calculator]**

The demand-torque calculator 3 collectively calculates the torque requested by external control systems, such as the transmission ECU 7, the air-condition ECU 8, and the electric-component ECU 9, and the torque requested by the driver to determine idling torque $Pi_{\_NeFB}$, acceleration torque $Pi_{\_APS}$, and two different types of demand torque that respond differently in a control operation (ignition-control torque $Pi_{\_EXT\_SA}$ and air-control torque $Pi_{\_EXT}$). The demand-torque calculator 3 sets the calculated torque as the torque to be supplied from the engine 10.

The idling torque $Pi_{\_NeFB}$ is demanded mainly for maintaining the idling state of the engine 10. The acceleration torque $Pi_{\_APS}$ is demanded mainly by the driver during normal driving. The ignition-control torque $Pi_{\_EXT\_SA}$ and the air-control torque $Pi_{\_EXT}$ are calculated on the basis of the acceleration torque $Pi_{\_ABS}$.

The ignition-control torque $Pi_{\_EXT\_SA}$ is used for ignition control of the spark plug 13 (ignition timing control). The ignition control is highly responsive, having a short time lag between the start of ignition control and the generation of the torque at the engine 10. The torque range controllable through ignition control is relatively small.

The air-control torque $Pi_{\_EXT}$ is used in air control of the throttle valve 23 (control of intake air volume). The air control is slightly less responsive than ignition control, having a long time lag between the start of air control and the generation of the torque at the engine 10. The torque range controllable through air control is larger than the torque range controllable through ignition control.

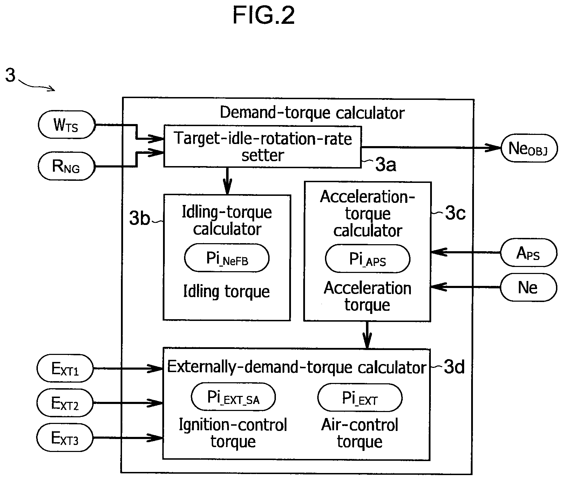

Fig. 2 illustrates a calculation process to be performed by the demand-torque calculator 3. The demand-torque calculator 3 includes a target-idle-rotation-rate setter 3a, an idling-torque calculator 3b, an acceleration-torque calculator 3c, and an externally-demand-torque calculator 3d.

The target-idle-rotation-rate setter 3a (second setter) sets the target rotation rate of the engine 10 in an idling state as the target idle rotation rate $Ne_{OBJ}$ (target idle revolution) . The idling state is an operating state in which the idling conditions hold. The idling state is defined by the vehicle speed, the acceleration operation value $A_{PS}$, and other factors. The idling conditions include, for example, Conditions 1, 3, and 5 described above.

The target-idle-rotation-rate setter 3a sets the target idle rotation rate $Ne_{OBJ}$ based on the coolant temperature $W_{TS}$ and/or the shift position of the select lever. For example, the target idle rotation rates $Ne_{OBJ}$ when the select lever is at the D or R position is smaller than the target idle rotation rate $Ne_{OBJ}$ when the select lever is at the P or N position. A low target idle rotation rate $Ne_{OBJ}$ is set for a high coolant temperature $W_{TS}$. The target idle rotation rate $Ne_{OBJ}$ may be changed in accordance with the operating conditions of the external load devices. The information on the calculated target idle rotation rate $Ne_{OBJ}$ is sent to the idling-torque calculator 3b and the limit-torque calculator 4.

The idling-torque calculator 3b calculates the torque corresponding to the set target idle rotation rate $Ne_{OBJ}$ (torque demanded for maintaining the actual rotation rate Ne at the target idle rotation rate $Ne_{OBJ}$) as the idling torque $Pi_{\_NeFB}$. The calculated idling torque $Pi_{\_NeFB}$ is sent to the target-torque calculator 5.

The acceleration-torque calculator 3c calculates the torque requested to the engine 10 through the operation of the driver as the acceleration torque $Pi_{\_APS}$. The acceleration torque $Pi_{\_APS}$ is calculated on the basis of the actual rotation rate Ne and the acceleration operation value $A_{PS}$. The acceleration torque $Pi_{\_APS}$ may be changed in accordance with the operating conditions of the external load devise. The information on the calculated acceleration torque $Pi_{\_APS}$ is sent to the externally-demand-torque calculator 3d and the target-torque calculator 5.

The externally-demand-torque calculator 3d calculates two-types of demand torque based on the acceleration torque $Pi_{\_APS}$ calculated by the acceleration-torque calculator 3c in consideration of torque requested by the external load devices from the external control system. One type of torque is ignition-control torque $Pi_{\_EXT\_SA}$, and the other is air-control torque $Pi_{\_EXT}$. The ignition-control torque $Pi_{\_EXT\_SA}$ and the air-control torque $Pi_{\_EXT}$ are independently calculated by the externally-demand-torque calculator 3d. The two types of demand torque are sent to the target-torque calculator 5.

**[2-3. Limit-torque Calculator]**

The limit-torque calculator 4 calculates the limit torque $Pi_{LIM\_H}$ at start-up of the engine 10. Start-up of the engine 10 refers to manual start-up or start-up by auto-restart control. A period of the start-up includes a term after complete combustion of the engine 10, to the moment the actual rotation rate Ne converges to the target idle rotation rate $Ne_{OBJ}$.

Usually, the actual rotation rate Ne of the engine 10 is controlled such that it suddenly increases after complete combustion of the engine 10 and then converges to the target idle rotation rate $Ne_{OBJ}$. An increase in the actual rotation rate Ne after complete combustion is referred to as "revving-up". The limit-torque calculator 4 calculates a limit torque $Pi_{LIM\_H}$, which is the maximum torque that minimizes the revving-up (prevents an excess increase of the actual rotation rate Ne) within a range that does not interfere with the start-up performance of the engine 10. A control to limit the engine torque to the limit torque $Pi_{LIM\_H}$ is referred to as limit control.

An increase in the engine torque is suppressed through the limit control; hence, if, for example, the limit torque $Pi_{LIM\_H}$ is set to a fixed value, the start-up performance of the engine 10 may be impaired depending on the operating conditions of the engine 10. Through the torque limit control according to this embodiment, different values of limit torque $Pi_{LIM\_H}$ are set in response to the start intention at start-up of the engine 10 or the shift position of the select lever to prevent the revving-up with maintaining the start-up performance.

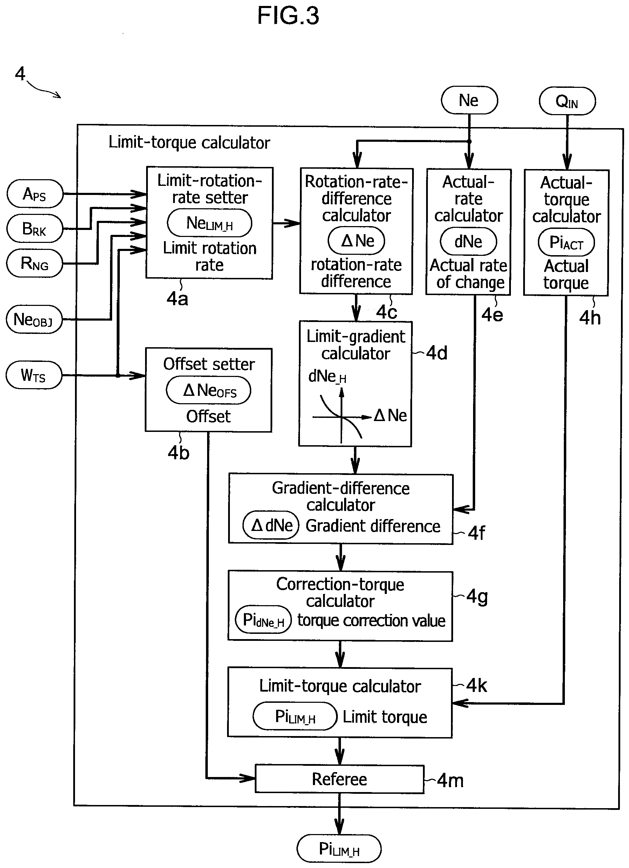

Fig. 3 illustrates the calculation process carried out by the limit-torque calculator 4. The limit-torque calculator 4 includes a limit-rotation-rate setter 4a, an offset setter 4b, a rotation-rate-difference calculator 4c, a limit-gradient calculator 4d, an actual-rate calculator 4e, a gradient-difference calculator 4f, a correction-torque calculator 4g, an actual-torque calculator 4h, a limit-torque calculator 4k, and a referee 4m.

The limit-rotation-rate setter 4a (first setter) sets the limit rotation rate $Ne_{LIM\_H}$ (limit revolutions per unit time), which is the upper limit of the actual rotation rate Ne. Several values of the limit rotation rate $Ne_{LIM\_H}$ are calculated on the basis of various parameters associated with the operating status of the vehicle, and then an appropriate limit rotation rate $Ne_{LIM\_H}$ is selected from the calculated values in accordance with the operating status. The selected final (definitive) limit rotation rate $Ne_{LIM\_H}$ is sent to the rotation-rate-difference calculator 4c.

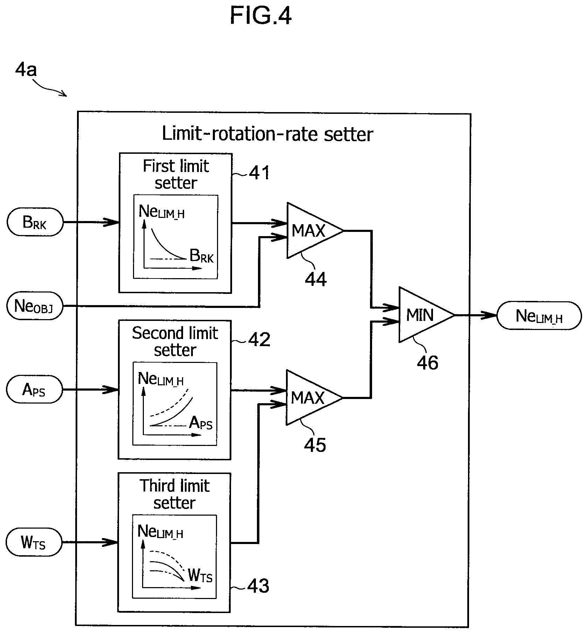

Fig. 4 schematically illustrates the procedures of setting the limit rotation rate $Ne_{LIM\_H}$. The limit-rotation-rate setter 4a sets limit rotation rates $Ne_{LIM\_H}$ for each of the acceleration operation value $A_{PS}$, the brake-fluid pressure $B_{RK}$, and the coolant temperature $W_{TS}$ and selects a final limit rotation rate $Ne_{LIM\_H}$ on the basis of the set limit rotation rates $Ne_{LIM\_H}$ and the target idle rotation rate $Ne_{OBJ}$.

As illustrated in Fig. 4, the limit-rotation-rate setter 4a includes a first limit setter 41, a second limit setter 42, a third limit setter 43, maximum-value selectors 44 and 45, and a minimum-value selector 46. The limits set by setters 41, 42, and 43 are respectively referred to as a first limit, second limit, and third limit, and the limits selected by the maximum-value selectors 44 and 45 are respectively referred to as a fourth limit and fifth limit.

The first limit setter 41 sets the first limit on the basis of the brake-fluid pressure $B_{RK}$. A map, an expression, or some other medium representing characteristics of the brake-fluid pressure $B_{RK}$ that increases as the limit rotation rate $Ne_{LIM\_H}$ (first limit) decreases, such as that illustrated in Fig. 5C, is assigned in advance. The first limit setter 41 refers to such a map or expression to set the first limit and reflects the start intention issued during brake application (start intention issued by reducing the depression of the brake pedal) to the limit control.

The dash-double dot line in Fig. 5C represents the target idle rotation rate $Ne_{OBJ}$ in a hot state. The first limit is set within a range higher than or equal to the target idle rotation rate $Ne_{OBJ}$ in a hot state. The target idle rotation rate $Ne_{OBJ}$ at cold start is set higher than that in a hot state and will be displayed at a position higher than the dash-double dot line in Fig. 5C. Thus, if the brake-fluid pressure $B_{RK}$ is relatively high at cold start, the first limit may be lower than the target idle rotation rate $Ne_{OBJ}$.

The first limit set by the first limit setter 41 is input to the maximum-value selector 44 together with the target idle rotation rate $Ne_{OBJ}$. Then, a larger value of these is set as the fourth limit. As a result, the fourth limit increases within a range above the target idle rotation rate $Ne_{OBJ}$ as the brake-fluid pressure $B_{RK}$ decreases. The fourth limit does not fall below the target idle rotation rate $Ne_{OBJ}$. That is, at least the target idle rotation rate $Ne_{OBJ}$ is maintained even when intense control is applied to the actual rotation rate Ne.

The second limit setter 42 determines the second limit on the basis of the acceleration operation value $A_{PS}$. A map, an expression, or some other medium representing a characteristic of the limit rotation rate $Ne_{LIM\_H}$ (second limit) that increases as the acceleration operation value $A_{PS}$ increases, such as that illustrated in Fig. 5A, is assigned in advance. The second limit setter 42 refers to such a map or expression to set the second limit and reflects the start intention issued during operation of the accelerator pedal in the limit control.

The dash-double dot line in Fig. 5A represents the target idle rotation rate $Ne_{OBJ}$ in a hot state. Similar to the first limit, the second limit is set within a range higher than or equal to the target idle rotation rate $Ne_{OBJ}$ in a hot state.

When the select lever is at the D position, the second limit is set lower than when the select lever is at any shift position other than the D position (i.e., at the P, R, or N position). The set second limit is sent to the maximum-value selector 45.

The third limit setter 43 determines the third limit on the basis of the coolant temperature $W_{TS}$. A map, an expression, or some other medium representing characteristics of the limit rotation rate $Ne_{LIM\_H}$ (third limit) that decreases as the coolant temperature $W_{TS}$ increases, such as that illustrated in Fig. 5B, is assigned in advance. The third limit setter 43 refers to such a map or expression to set the third limit and reflects the warm-up level of the engine 10 in the limit control.

The dash-double dot line in Fig. 5B represents the target idle rotation rate $Ne_{OBJ}$. The third limit is set within a range higher than or equal to the target idle rotation rate $Ne_{OBJ}$. Typically, a low target idle rotation rate $Ne_{OBJ}$ is set for a high coolant temperature $W_{TS}$. In addition, at a high coolant temperature $W_{TS}$, the start-up performance of the engine slightly improves due to a reduction in engine friction. Thus, slightly intense limit control compensates for this improvement and effectively suppresses revving-up.

Similar to the second limit, when the select lever is at the D position, the third limit is set lower than when the select lever is at a position other than the D position (i.e., at the P, R, or N position). The set third limit is sent to the maximum-value selector 45.

As described above, the maximum-value selector 44 selects the larger one of the first limit and the target idle rotation rate $Ne_{OBJ}$ as the fourth limit, while the maximum-value selector 45 selects the larger one of the second limit and the third limit as the fifth limit.

The fourth limit is a parameter that intensifies the limit control when the braking operation value is large (when the amount by which the brake pedal is depressed is large) and maintains at least the target idle rotation rate $Ne_{OBJ}$.

The fifth limit is parameter that intensifies the limit control when the acceleration operation value is small (when the amount by which the accelerator pedal is depressed is small) or when the coolant temperature $W_{TS}$ is high. Since the third limit is set within a range higher than or equal to the target idle rotation rate $Ne_{OBJ}$, the fifth limit is also higher than or equal to the target idle rotation rate $Ne_{OBJ}$. Thus, both the fourth limit and fifth limit are set within a range higher than or equal to the target idle rotation rate $Ne_{OBJ}$. The fourth limit and the fifth limit are sent to the minimum-value selector 46.

The minimum-value selector 46 selects the smaller one of the fourth limit and the fifth limit as the final limit rotation rate $Ne_{LIM\_H}$. The minimum-value selector 46 selects the controlled value that is to be intensely controlled from the controlled values associated with the braking operation and the controlled values associated with the acceleration operation. For example, if the braking operation is not performed, the first limit corresponding to the brake-fluid pressure $B_{RK}$ is set to a large value (weakly controlled) in response to a traveling intention. Thus, the second limit corresponding to the acceleration operation value $A_{PS}$ and the third limit corresponding to the coolant temperature $W_{TS}$ are controlled. In contrast, if the braking operation is performed, the first limit is set to a small value (intensely controlled) in response to a weak traveling intention. Thus, a limit rotation rate $Ne_{LIM\_H}$ lower than the second and third limits can be selected or, in other words, the limit rotation rate $Ne_{LIM\_H}$ is intensely controlled.

The offset setter 4b determines the offset $\Delta Ne_{OFS}$ of the actual rotation rate Ne on the basis of the coolant temperature $W_{TS}$. The offset $\Delta Ne_{OFS}$ is a value associated with the condition of starting limit control of the engine torque using the limit torque $Pi_{LIM\_H}$ and corresponds to the fluctuation in the actual rotation rate Ne for limit control. That is, the limit control maintains the actual rotation rate Ne within the range of $(Ne_{LIM\_H}-\Delta Ne_{OFS}) \leq Ne$ (and such that $Ne < Ne_{LIM\_H}$). Thus, the limit control is not performed if the actual rotation rate Ne is lower than $(Ne_{LIM\_H}-\Delta Ne_{OFS})$ immediately

after start-up of the engine 10 and is performed at the moment the actual rotation rate Ne becomes higher than or equal to ($Ne_{LIM\_H}$-$\Delta Ne_{OFS}$).

As illustrated in Fig. 5D, a larger offset $\Delta Ne_{OFS}$ is set for low coolant temperature $W_{TS}$. A large offset $\Delta Ne_{OFS}$ facilitates limit control after start-up of the engine 10 (i.e., reduces the time from start-up of the engine 10 to start of the limit control), and thus, torque is controlled at a relatively low actual rotation rate Ne. However, if the coolant temperature $W_{TS}$ is extremely low at start-up of the engine 10, the offset $\Delta Ne_{OFS}$ may be set slightly small so as to improve the start-up performance. The information on the set offset $\Delta Ne_{OFS}$ is sent to the referee 4m.

The rotation-rate-difference calculator 4c calculates the rotation-rate difference $\Delta Ne$ between the limit rotation rate $Ne_{LIM\_H}$ set by the limit-rotation-rate setter 4a and the actual rotation rate Ne of the engine 10. The rotation-rate difference $\Delta Ne$ is represented by $\Delta Ne=Ne-Ne_{LIM\_H}$, where Ne is the actual rotation rate, and $Ne_{LIM\_H}$ is the limit rotation rate. The calculated rotation-rate difference $\Delta Ne$ is sent to the limit-gradient calculator 4d.

The limit-gradient calculator 4d calculates the limit gradient $dNe_{\_H}$ of the rate of change dNe in the actual rotation rate Ne (limit acceleration of the actual rotation rate Ne) on the basis of the rotation-rate difference $\Delta Ne$. As illustrated in Fig. 5E, for example, the limit-gradient calculator 4d contains an expression, a map, or some other medium set in advance representing the correspondence relationship between the rotation-rate difference $\Delta Ne$ and the limit gradient $dNe_{\_H}$ and calculates the limit gradient $dNe_{\_H}$ based on this correspondence relationship. The calculated limit gradient $dNe_{\_H}$ is sent to the gradient-difference calculator 4f.

The limit gradient $dNe_{\_H}$ corresponds to the maximum variation allowed by the actual rotation rate Ne from a given moment to another moment after criterial unit time, i.e., represents the maximum value of a gradient in the future. In Fig. 5E, the limit gradient $dNe_{\_H}$ has a positive value if the rotation-rate difference $\Delta Ne$ is a negative value and has a negative value if the rotation-rate difference $\Delta Ne$ is a positive value. That is, if the actual rotation rate Ne is lower than the limit rotation rate $Ne_{LIM\_H}$, the gradient of the actual rotation rate Ne approaches zero so as to prevent the actual rotation rate Ne from increasing to a higher rate as the actual rotation rate Ne approaches the limit rotation rate $Ne_{LIM\_H}$. If the actual rotation rate Ne exceeds the limit rotation rate $Ne_{LIM\_H}$, the gradient of the actual rotation rate Ne changes to negative (decreasing gradient) such that the actual rotation rate Ne decreases. In this way, the limit gradient $dNe_{\_H}$ is steep if the absolute value of the rotation-rate difference $\Delta Ne$ is large and is substantially horizontal if the absolute value of the rotation-rate difference $\Delta Ne$ is small. That is, a larger absolute value of the rotation-rate difference $\Delta Ne$ decreases the target value of the rate of change dNe in the actual rotation rate Ne.

The actual-rate calculator 4e calculates the actual rate of change dNe (actual acceleration) of the actual rotation rate Ne of the engine 10. The actual rate of change dNe corresponds to the actual gradient of the actual rotation rate Ne to a given moment. In other words, the actual rate of change dNe corresponds to the gradient from the past to the present, whereas the limit gradient $dNe_{\_H}$ corresponds to the maximum value of the gradient from the present to the future, i.e., the maximum value of the gradient serving as a control target.

The actual rate of change dNe is calculated from, for example, Equation 1 on the basis of the actual rotation rate Ne(n) detected in the present stroke and the actual rotation rate Ne (n-k) detected in the time corresponding to the number (k) of previous strokes. The calculated actual rate of change dNe is sent to the gradient-difference calculator 4f and the referee 4m. In this embodiment, k=2. Thus, the gradient of the actual rotation rate Ne, in the time corresponding to about two previous strokes from the past to the presents, is calculated.

[Equation 1]

$$dNe = \frac{Ne_{(n)} - Ne_{(n-k)}}{(\text{Time corresponding to k strokes})} \qquad (1)$$

The gradient-difference calculator 4f calculates the gradient difference $\Delta dNe$ (acceleration difference), which is the difference between the limit gradient $dNe_{\_H}$ calculated by the limit-gradient calculator 4d and the actual rate of change dNe calculated by the actual-rate calculator 4e. The gradient difference $\Delta dNe$ is derived from, for example, the following Equation 2. The information on the calculated gradient difference $\Delta dNe$ is sent to the correction-torque calculator 4g.

[Equation 2]

$$\Delta dNe = dNe - dNe_{\_H} \qquad (2)$$

The correction-torque calculator 4g calculates a torque correction value $Pi_{dNe\_H}$ for preventing the gradient of the future actual rotation rate Ne from exceeding the limit gradient $dNe_{\_H}$. The torque correction value $Pi_{dNe\_H}$ is obtained by converting the gradient difference $\Delta dNe$ calculated by the gradient-difference calculator 4f to the torque. The torque correction value $Pi_{dNe\_H}$ is calculated by the following Equation 3 on the basis of the moment of inertia Ie around the crank shaft of the engine 10, the cylinder volume $V_{ENG}$, and the gradient difference $\Delta dNe$. The calculated torque correction value $Pi_{dNe\_H}$ is sent to the limit-torque calculator 4k. [Equation 3]

$$Pi_{dNe\_H} = \frac{2\pi^2 Ie \cdot \Delta dNe}{60V_{ENG}} \qquad (3)$$

The actual-torque calculator 4h calculates the torque that is generated by the actual air intake rate to a cylinder as the actual torque $Pi_{ACT}$ on the basis of the air intake rate $Q_{IN}$ detected by the air-flow sensor 34. The actual torque $Pi_{ACT}$ is an estimated value of torque generated when a volume of air corresponding to the air intake rate $Q_{IN}$ is combusted at a certain air-fuel ratio. In this embodiment, the actual torque $Pi_{ACT}$ of two strokes before is calculated. An amount of time for the two strokes is corresponding to an amount of time in calculation of the gradient by the actual-rate calculator 4e. If k=3 in the Equation 1, the actual torque $Pi_{ACT}$ of three strokes before is calculated. The calculated actual torque $Pi_{ACT}$ is sent to the limit-torque calculator 4k.

The limit-torque calculator 4k calculates the limit torque $Pi_{LIM\_H}$ on the basis of the actual torque $Pi_{ACT}$ calculated by the actual-torque calculator 4h of a moment corresponding to about two strokes in the past and the torque correction value $Pi_{dNe\_H}$ calculated by the correction-torque calculator 4g. The limit torque $Pi_{LIM\_H}$ is a parameter for controlling the maximum value of the torque of the engine 10. The result of subtracting the torque correction value $Pi_{dNe\_H}$ from the actual torque $Pi_{ACT}$ of a moment corresponding to about two strokes in the past is acquired as the limit torque $Pi_{LIM\_H}$. This can be expressed as $Pi_{LIM\_H}=(Pi_{ACT}$ of two strokes before$)-Pi_{dNe\_H}$.

The maximum value of the torque controlled through limit control is set in advance as maximum torque $Pi_{MAX}$, and the range of the limit torque $Pi_{LIM\_H}$ is limited to a range lower than or equal to the maximum torque $Pi_{MAX}$. For example, the smaller one of the calculated limit torque $Pi_{LIM\_H}$ and the criterial maximum torque $Pi_{MAX}$ may be selected and set as the final limit torque $Pi_{LIM\_H}$. The calculated limit torque $Pi_{LIM\_H}$ is sent to the referee 4m.

The referee 4m determines whether the start condition of the limit control performed on engine torque is satisfied with reference to the limit torque $Pi_{LIM\_H}$ calculated by the limit-torque calculator 4k. The referee 4m also determines whether the end condition of the limit control is satisfied with reference to the limit torque $Pi_{LIM\_H}$.

The limit control is started if all of the following Conditions 11, 12, and 13 hold. For example, if all of these conditions hold at restart in an idle-stop mode or start-up of the engine 10 by a manual operation (ignition key operation), the information on the limit torque $Pi_{LIM\_H}$ is sent from the referee 4m to the target-torque calculator 5. Conditions 11 to 13 are as follows:

Condition 11: The actual rotation rate Ne is greater than a criterial start-up-completion rotation rate $Ne_S$ ($Ne>Ne_S$);
Condition 12: The actual rotation rate Ne exceeds the difference between the limit rotation rate $Ne_{LIM\_H}$ and the offset $\Delta Ne_{OFS}$ ($Ne>Ne_{LIM\_H}-\Delta Ne_{OFS}$); and
Condition 13: The controlled torque $Pi_{BS\_LIM}$ exceeds the torque correction value $Pi_{dNe\_H}$ ($Pi_{BS\_LIM}> Pi_{dNe\_H}$).

The controlled torque $Pi_{BS\_LIM}$ in Condition 13 is the maximum torque among the acceleration torque $Pi_{\_APS}$ calculated by the demand-torque calculator 3, the ignition-control torque $Pi_{\_EXT\_SA}$, the actual torque $Pi_{ACT}$ of the present stroke, and other types of torque.

The limit control is completed if any one of the following Conditions 14 to 17 hold. For example, if one of these conditions holds during the limit control, the transmission of information on the limit torque $Pi_{LIM\_H}$ from the referee 4m to the target-torque calculator 5 is interrupted, and the limit control ends. Conditions 14 to 17 are as follows:

Condition 14: Idle feedback control is performed;
Condition 15: A criterial control time elapses after engine start-up;
Condition 16: The filtered value of the air intake rate $Q_{IN}$ substantially equals the estimated value of the cylinder intake rate; and
Condition 17: The actual rate of change dNe of the actual rotation rate Ne is zero or less.

According to Condition 16, the limit control ends if the estimated value of the cylinder intake volume of air actually taken into a cylinder substantially equals the filtered value of the air intake rate $Q_{IN}$ detected by the air-flow sensor 34. The filtered value is data-processed information about intake volume of air, derived from simulation output of the lag in the intake flow between the air-flow sensor 34 and the cylinder.

In general, the pressure inside the intake manifold is substantially equal to atmosphere pressure immediately after start-up of the engine 10. Hence, air temporarily flows into the cylinders at a rate higher than the air intake rate $Q_{IN}$

detected by the air-flow sensor 34. That is, the actual cylinder intake volume immediately after start-up is larger than the intake volume corresponding to the air intake rate $Q_{IN}$ detected by the air-flow sensor 34, and thus, revving-up of the engine is more likely to occur. As the pressure in the intake manifold gradually decreases over time, the cylinder intake volume equals the intake volume corresponding to the air intake rate $Q_{IN}$, stabilizing operation.

Figs. 6A and 6B illustrate the change in the cylinder intake volume and the change in the intake volume based on the value detected by the air-flow sensor 34 after start-up of the engine 10. The dotted lines in the drawings represent the air volume corresponding to the value detected by the air-flow sensor 34 (raw value) ; the thin solid line represents the intake volume (filtered value) obtained by filtering the raw value for the lag in intake; and the thick solid line represents the estimated value of the cylinder intake volume.

The initial value of the cylinder intake volume corresponds to the intake volume of when the pressure in the intake manifold is equal to atmosphere pressure and the throttle valve 23 is at full-open and can be set in advance based on, for example, the volumes of the surge air tank 21 and the intake pipe 24. The fluctuation in the cylinder intake volume can be approximated by a first-order lag in the detection value of the air-flow sensor 34. Thus, the estimated cylinder intake volume and the intake volume corresponding to the rate detected by the air-flow sensor 34 are calculated continually for a period until the difference between the intake volumes to become smaller than a criterial value (until they are substantially equal), as illustrated in Fig. 6A. The limit control for such a period can effectively reduce the revving-up.

Such a period can be applied even when the acceleration operation is performed during limit control. That is, as illustrated in Fig. 6B, the value detected by the air-flow sensor 34 (dotted line) increases together with the acceleration operation value, and the estimated intake volume (thin solid line) follows the fluctuation with a delay. The cylinder intake volume (thick solid line) is approximated by a first-order lag of the detected value (dotted line), and the cylinder intake volume gradually approaches the estimated intake volume.

A comparison of Figs. 6A and 6B indicates that, the time taken for the cylinder intake volume to substantially equal the estimated intake volume is decreased when acceleration operation is performed, compared with when the acceleration operation is not performed. This is due to an increase in the rotation rate of the engine in response to the acceleration operation, causing an increase in the number of intakes. If the select lever is at a non-driving position, the revving-up of the engine is sufficiently suppressed even when the limit control ends upon satisfaction of Condition 16. Revving-up can be suppressed even when the select lever is at a driving position. However, in such a case, the period of limit control may be extended after satisfaction of Condition 16, as the occasion arises.

## [2-4. Target-torque Calculator]

The target-torque calculator 5 (limit controller, idling controller) calculates two types of target torque on the basis of the different types of demand torque calculated by the demand-torque calculator 3 and the limit torque $Pi_{LIM\_H}$ calculated by the limit-torque calculator 4. The two types of torque are ignition-control target torque $Pi_{\_TGT}$ and air-control target torque $Pi_{\_ETV\_STD}$. The throttle opening and the fuel injection rate of the throttle valve 23 are controlled on the basis of the calculated air-control target torque $Pi_{\_ETV\_STD}$. The ignition timing of the spark plug 13 is controlled on the basis of the calculated ignition-control target torque $Pi_{\_TGT}$.

Fig. 7 illustrates the calculation process carried out by the target-torque calculator 5. The target-torque calculator 5 includes an air-control selector 5a, an air-control limiter 5b, an intake-lag corrector 5c, a first ignition-control limiter 5d, a second ignition-control limiter 5e, and an ignition-control selector 5f.

The air-control selector 5a selects one of the air-control torque $Pi_{\_EXT}$, the acceleration torque $Pi_{\_APS}$, and the idling torque $Pi_{\_NeFB}$ as a torque target value for air control. For example, a torque value is selected on the basis of information on a torque request from the external control systems and idling of the engine 10. The idling torque $Pi_{\_NeFB}$ is selected if Conditions 1, 3, and 5 hold. In this embodiment, the actual rotation rate Ne increases immediately after start-up of the engine 10. The idling torque $Pi_{\_NeFB}$ is selected when the actual rate of change dNe equals zero. That is, idle feedback control is started once the actual rate of change dNe equals or falls below zero for the first time after start-up of the engine 10. The selected torque is sent to the air-control limiter 5b.

The air-control limiter 5b selects the smaller one of the torque selected by the air-control selector 5a and the limit torque $Pi_{LIM\_H}$ calculated by the limit-torque calculator 4. The selected torque is sent to the intake-lag corrector 5c. If the limit torque $Pi_{LIM\_H}$ is lower than the torque selected by the air-control selector 5a, the torque is controlled by preferentially selecting the limit torque $Pi_{LIM\_H}$. If the limit torque $Pi_{LIM\_H}$ is higher than the torque selected by the air-control selector 5a, the selected torque is directly sent to the intake-lag corrector 5c.

As defined in Condition 14, limit control is not performed when the engine 10 is idling. Thus, if the torque selected by the air-control selector 5a equals the idling torque $Pi_{\_NeFB}$, comparison of the selected torque and the limit torque $Pi_{LIM\_H}$ is omitted, and the idling torque $Pi_{\_NeFB}$ may be directly sent to the intake-lag corrector 5c.

The intake-lag corrector 5c performs correction for intake lag with reference to the throttle valve 23. The air-control target torque $Pi_{\_ETV\_STD}$ in consideration of the intake lag is calculated on the basis of intake characteristics of the engine 10 and the throttle valve 23. Various procedures of calculating intake lag may be employed in accordance with the control status of the throttle valve 23 using the air-control target torque $Pi_{\_ETV\_STD}$. For example, desired torque fluctuation may be achieved by a first-order lag process and a second-order lag process, which simulate the actual intake lag, on the torque selected by the air-control selector 5a in accordance with the operating conditions and the type of the selected demand torque.

The first ignition-control limiter 5d selects the smaller one of the acceleration torque $Pi_{\_APS}$ and the limit torque $Pi_{LIM\_H}$. Similarly, the second ignition-control limiter 5e selects the smaller one of the ignition-control torque $Pi_{\_EXT\_SA}$ and the limit torque $Pi_{LIM\_H}$. The selected torque is sent to the ignition-control selector 5f.

The ignition-control selector 5f selects one of the two types of selected torque or the idling torque $Pi_{\_NeFB}$ as the ignition-control target torque $Pi_{\_TGT}$. Similar to the selection process by the air-control selector 5a, the torque is selected on the basis of, for example, information on a torque demanded from the external control systems and idling of the engine 10. Similar to the air-control selector 5a, the ignition-control selector 5f according to this embodiment selects the idling torque $Pi_{\_NeFB}$ when the actual rate of change dNe equals zero immediately after start-up of the engine 10.

Accordingly, the engine controller 1 converts various output requests to the engine 10 into various types of torque, which are further merged into air-control target torque $Pi_{\_ETV\_STD}$ or ignition-control target torque $Pi_{\_TGT}$. The engine controller 1 controls the opening of the throttle valve 23, the fuel injection rate, the ignition timing of the spark plug 13 on the basis of the air-control target torque $Pi_{\_ETV\_STD}$ and the ignition-control target torque $Pi_{\_TGT}$.

### [3. Operation]

### [3-1. Restart to Idling]

Fig. 8A illustrates the fluctuation in the actual rotation rate Ne of the engine 10 when limit control is performed at restart in an idle-stop mode. Figs. 8B and 8C illustrate the fluctuation in target torque and ignition timing, respectively. At a time $t_0$, idle-stop control is performed while the vehicle is waiting at a stoplight, the select lever is at the D position, the accelerator pedal is not depressed, and the brake pedal is fully depressed.

As illustrated in Fig. 8A, if a start-up request from an external load device is issued at the time $t_0$ and Condition 10 holds, auto-restart control of the engine 10 is performed and cranking starts. Then, the engine 10 is started up at a time $t_1$ after initial combustion and complete combustion, and the actual rotation rate Ne increases. Meanwhile, the offset setter 4b of the limit-torque calculator 4 determines the offset $\Delta Ne_{OFS}$ on the basis of the coolant temperature $W_{TS}$.

The referee 4m determines whether Conditions 11 to 13 hold. Condition 11 holds only if the actual rotation rate Ne exceeds the start-up-completion rotation rate $Ne_S$. Thus, limit control is not started in an unstable state in which the actual rotation rate Ne does not reach the start-up-completion rotation rate $Ne_S$. Condition 12 holds only if the actual rotation rate Ne exceeds the difference between the limit rotation rate $Ne_{LIM\_H}$ and the offset $\Delta Ne_{OFS}$. The offset $\Delta Ne_{OFS}$ is changed in accordance with the coolant temperature $W_{TS}$; hence, the start condition of lower-limit control is also affected by the coolant temperature $W_{TS}$. As illustrated in Fig. 5D, if the offset $\Delta Ne_{OFS}$ decreases as the coolant temperature $W_{TS}$ increases, the high coolant temperature $W_{TS}$ results in a high actual rotation rate Ne that satisfies the start condition of the lower-limit control.

Condition 13 only holds if the torque demanded for the engine 10 at a given time is higher than the torque correction value $Pi_{dNe\_H}$ determined by converting, to torque, the limit gradient $dNe_{\_H}$ corresponding to the maximum future gradient of the actual rotation rate Ne. In other words, Condition 13 holds upon the request of torque that causes an increase in the rotation rate such that the rotation rate exceeds the limit gradient $dNe_{\_H}$ calculated by the limit-gradient calculator 4d.

The limit control is performed if all Conditions 11 to 13 hold at a time $t_2$. The limit-rotation-rate setter 4a determines the maximum values of the rotation rate of the engine (first limit, second limit, and third limit) for the acceleration operation value $A_{PS}$, the brake-fluid pressure $B_{RK}$, and the coolant temperature $W_{TS}$ and determines the limit rotation rate $Ne_{LIM\_H}$, which is represented by the dash-dot line in Fig. 8A.

As illustrated in Figs. 5A and 5B, the limit rotation rate $Ne_{LIM\_H}$ determined through the limit control is set in accordance with the shift position of the select lever. When the select lever is at the D position, the limit rotation rate $Ne_{LIM\_H}$ is set to a value smaller than that of when the select lever is at positions other than the D position. That is, the dash-dot line in Fig. 8A is set lower at the engine start-up with the select lever at the D position, more intensely suppressing the actual rotation rate Ne.

Through the limit control, the limit gradient $dNe_{\_H}$ corresponding to the rotation-rate difference $\Delta Ne$ between the limit rotation rate $Ne_{LIM\_H}$ and the actual rotation rate Ne is calculated; that is, the target torque of the engine 10 is reduced to suppress the fluctuation in the rotation rate that exceeds the limit gradient $dNe_{\_H}$. The gradient-difference calculator 4f calculates the gradient difference $\Delta dNe$ between the limit gradient $dNe_{\_H}$ and the actual rate of change dNe. The correction-torque calculator 4g calculates the torque correction value $Pi_{dNe\_H}$. The limit-torque calculator 4k calculates the limit torque $Pi_{LIM\_H}$.

The limit rotation rate $Ne_{LIM\_H}$ is set higher than or equal to the target idle rotation rate $Ne_{OBJ}$. Thus, the range from the target idle rotation rate $Ne_{OBJ}$ to the limit rotation rate $Ne_{LIM\_H}$ equals a variable range of the actual rotation rate Ne.

The limit torque $Pi_{LIM\_H}$ calculated by the limit-torque calculator 4 is sent to the target-torque calculator 5 and is reflected to the limits of the air-control target torque $Pi_{\_ETV\_STD}$ and the ignition-control target torque $Pi_{\_TGT}$. As a result, as illustrated in Fig. 8C, the ignition timing of the spark plug 13 is significantly retarded after the time $t_2$ reducing the engine torque. As represented by the solid line in Fig. 8B, the target value of the engine torque (target torque) is significantly reduced after the time $t_2$. Such control, as represented by the dot line in Fig. 8A, can prevent a sudden increase in the rotation rate of the engine immediately after start-up, suppressing revving-up of the engine.

Immediately after the time $t_2$, the actual rotation rate Ne more closely approaches the limit rotation rate $Ne_{LIM\_H}$, reducing the rotation-rate difference ΔNe. As a result, the limit gradient $dNe_{\_H}$ calculated by the limit-gradient calculator 4d decreases, while the range of fluctuation in the actual rotation rate Ne decreases. That is, as the actual rotation rate Ne approaches the limit rotation rate $Ne_{LIM\_H}$, the fluctuation in the rotation rate is more intensely suppressed.

The actual rate of change dNe of the rotation rate of the engine decreases as the fluctuation in the rotation rate decreases. The gradient difference ΔdNe between the actual rate of change dNe and the limit gradient $dNe_{\_H}$ also decreases with decreasing the fluctuation. At a time $t_3$, the limit gradient $dNe_{\_H}$ equals the actual rate of change dNe, the gradient difference ΔdNe equals zero, and the torque correction value $Pi_{dNe\_H}$ calculated by the correction-torque calculator 4g equals zero. Thus, after the time $t_3$, the torque is practically uncontrolled. At this time, the target torque of the engine 10 is lower than or equal to the limit torque $Pi_{LIM\_H}$, as illustrated in Fig. 8B. The limit control continues until the end condition holds; hence, for example, if the actual rotation rate Ne of the engine 10 increases again after the time $t_3$, the fluctuation in the rotation rate is suppressed.

When the actual rate of change dNe equals zero at a time $t_4$, the air-control selector 5a and the ignition-control selector 5f of the target-torque calculator 5 select the idling torque $Pi_{\_NeFB}$, and idle feedback control starts. As a result, the torque is controlled such that the actual rotation rate Ne of the engine 10 smoothly converges to the target idle rotation rate $Ne_{OBJ}$. That is, the air-control target torque $Pi_{\_ETV\_STD}$ and the ignition-control target torque $Pi_{\_TGT}$ are calculated on the basis of the idling torque $Pi_{\_NeFB}$, and the throttle opening, the fuel injection rate, the ignition timing, and other factors are controlled.

**[3-2. Restart to Creeping]**

Figs. 9A and 9B illustrate the effect of limit control performed when the engine 10 restarts in response to the driver releasing the brake pedal while in an idle-stop mode. Fig. 9A illustrates the fluctuation in the braking operation value (brake-fluid pressure $B_{RK}$), and Fig. 9B illustrates the fluctuation in the actual rotation rate Ne.

Condition 8 holds when the brake-fluid pressure $B_{RK}$ falls below a criterial value in response to releasing the brake pedal at a time $t_A$, and auto-restart control starts, initiating cranking. After the engine 10 restarts at $t_5$, the limit control is performed when all Conditions 11 to 13 hold at a time $t_6$. As illustrated in Fig. 5C, the limit-rotation-rate setter 4a sets a high first limit for low brake-fluid pressure $B_{RK}$.

Consequently, as represented by the dash-dot line in Fig. 9B, the limit rotation rate $Ne_{LIM\_H}$ increases as the brake pedal is released. That is, a high limit rotation rate $Ne_{LIM\_H}$ is set for an intense start intention. In contrast, if the start intention is weak, a low limit rotation rate $Ne_{LIM\_H}$ is set. A time $t_B$ when the gradient of the temporal change in the limit rotation rate $Ne_{LIM\_H}$ matches the time $t_B$ when the gradient of the temporal change in the braking operation value. If the braking operation value equals zero at a time $t_C$, the increase rate of the limit rotation rate $Ne_{LIM\_H}$ also equals zero.

Since the limit rotation rate $Ne_{LIM\_H}$ increases as the brake pedal is released, the actual rotation rate Ne easily increases. However, the fluctuation in the actual rotation rate Ne is limited within a range lower than or equal to the limit rotation rate $Ne_{LIM\_H}$. This control can maintain the torque demanded for creeping and the start-up performance of the engine 10 and reduce revving-up. The limit control ends after the criterial limit time $t_7$ being an elapsed time from the engine start-up, followed by regular torque control.

**[3-3. Restart to Acceleration]**

Figs. 10A and 10B exemplify the effect of the limit control performed when the accelerator pedal is depressed immediately after restart of the engine 10 in an idle-stop mode. Fig. 10A illustrates the fluctuation in the braking operation value (brake-fluid pressure $B_{RK}$). Fig. 10B illustrates the fluctuation in the acceleration operation value $A_{PS}$. Fig. 10C illustrates the fluctuation in the actual rotation rate Ne.

Condition 8 holds if the brake-fluid pressure $B_{RK}$ falls below a criterial value in response to releasing the brake pedal at a time $t_D$, and auto-restart control starts, initiating cranking. The limit control is performed when all Conditions 11 to 13 hold at a time tg after the engine 10 restarts at $t_8$.

The limit-rotation-rate setter 4a sets a high first limit for low brake-fluid pressure $B_{RK}$. At a time $t_E$, the braking operation value equals zero, and the accelerator pedal starts being depressed. In response, the limit-rotation-rate setter 4a sets the third limit to increase together with the increase in the acceleration operation value $A_{PS}$, as illustrated in Fig. 5A.

Accordingly, as represented by the dash-dot line in Fig. 10C, the limit rotation rate $Ne_{LIM\_H}$ increases as the brake pedal is released or as the accelerator pedal is depressed. The times $t_E$, $t_F$, and $t_G$ at which the gradient of the temporal change of the limit rotation rate $Ne_{LIM\_H}$ respectively match the times $t_E$, $t_F$, and $t_G$ at which the gradient of the temporal change of the braking operation value and the accelerating operation value changes. At a time $t_G$, the amount by which the accelerator pedal is depressed is maximized, and the increase rate of the limit rotation rate $Ne_{LIM\_H}$ equals zero.

In this way, a high limit rotation rate $Ne_{LIM\_H}$ enables the actual rotation rate Ne to easily increase within a range lower than or equal to the limit rotation rate $Ne_{LIM\_H}$. That is, the actual rotation rate Ne easily increases in response to the start intention, and the acceleration torque $Pi_{\_APS}$ is easily maintained. The limit control ends after the limit time $t_{10}$ being an elapsed time from the engine start-up.

**[4. Advantageous Effect]**

The engine controller 1 according to this embodiment has the following advantageous effects:

(1) The engine controller 1 controls the actual rotation rate Ne of the engine 10 such that it does not exceed the limit rotation rate $Ne_{LIM\_H}$ and then sets a lower limit rotation rate $Ne_{LIM\_H}$ for a weaker start intention. For example, as illustrated in Figs. 5A and 5C, a low first limit is set for a small acceleration operation value $A_{PS}$, and a low third limit is set for high brake-fluid pressure $B_{RK}$. The first limit and the third limit are reflected in the finally selected limit rotation rate $Ne_{LIM\_H}$. Such control can prevent a sudden increase in the actual rotation rate Ne (revving-up) that might occur immediately after start-up of the engine 10 and reduce unintended acceleration. In contrast, a high limit rotation rate $Ne_{LIM\_H}$ is set for an intense start intention. This ensures sufficient acceleration reflecting the start intention.

As illustrated in Fig. 8A, the limit control does not reduce the target idle rotation rate $Ne_{OBJ}$ for idle feedback control, but prevents revving-up that causes the actual rotation rate Ne to significantly exceed the target idle rotation rate $Ne_{OBJ}$. This control can reduce the fluctuation in the rotation rate and the torque while maintaining the start-up performance of the engine 10.

(2) The engine controller 1 sets the final limit rotation rate $Ne_{LIM\_H}$ to the minimum value selected by the minimum-value selector 46 on the basis of parameters corresponding to the start intention represented by values such as the acceleration operation value $A_{PS}$ and the brake-fluid pressure $B_{RK}$. For example, as illustrated in Fig. 4, the final limit rotation rate $Ne_{LIM\_H}$ is set to the more intensely controlled one of the fourth limit and the fifth limit. If the brake pedal is released at the same time the accelerator pedal is depressed, the limit control can be performed using a limit that allows more intense control, acceleration that satisfies the start intention can be provided, and a sudden increase in the rotation rate of the engine (revving-up) can be suppressed, reducing unintentional acceleration.

(3) The actual rotation rate Ne can be precisely changed along the limit gradient $dNe_{\_H}$ by converting, to torque, the gradient difference $\Delta dNe$ of the actual rotation rate Ne between the limit gradient $dNe_{\_H}$, which is the control target, and the actual rate of change $dNe$ and calculating the torque correction value $Pi_{dNe\_H}$. In this way, a sudden change in the rotation rate and revving-up can be suppressed.

(4) The actual rotation rate Ne is not excessively suppressed because the limit rotation rate $Ne_{LIM\_H}$ is set to a value higher than or equal to the target idle rotation rate $Ne_{OBJ}$ determined by the target-idle-rotation-rate setter 3a; thus, the actual rotation rate Ne can be increased near the target idle rotation rate $Ne_{OBJ}$ immediately after start-up. Stable rotation of the engine 10 is established immediately after start-up, while revving-up is suppressed.

(5) The engine controller 1 starts idle feedback control at the moment the actual rate of change $dNe$ of the actual rotation rate Ne equals or falls below zero for the first time after start-up of the engine 10. In this way, the actual rotation rate Ne can be more smoothly and quickly converged to the target idle rotation rate $Ne_{OBJ}$ compared with, for example, known idle feedback control that is performed based on the elapsed time after start-up. Moreover, the time taken for stabilization of the idling of the engine 10 can be shortened.

(6) The engine controller 1 refers to the braking operation, which represents a start intention, and sets a high limit rotation rate $Ne_{LIM\_H}$ for a small driving operation value, which reflects an intense start intention. Such control can suppress the revving-up of the engine 10 immediately after start-up and ensure the demand creeping torque. In particular, the control can improve the start-up stability and the driving stability of the vehicle at restart in an idle-stop mode.

(7) Similarly, the engine controller 1 refers to the acceleration operation, which represents a start intention, and sets a high limit rotation rate $Ne_{LIM\_H}$ for a large acceleration operation value, which reflects a strong start intention. Such control can suppress the revving-up of the engine 10 immediately after start-up and improve acceleration performance. In particular, the start-up stability and the mobility of the vehicle can be improved at restart in an idle-stop mode.

(8) As illustrated in Fig. 5B, the engine controller 1 sets a lower limit rotation rate $Ne_{LIM\_H}$ for a higher coolant temperature $W_{TS}$. That is, in a sufficiently warmed-up state, friction associated with the driving of the engine 10 decreases and revving-up easily occurs; thus, enhancing suppression of limit control. Such control can appropriately suppress the revving-up of the engine 10 immediately after the start-up and reduce unintentional acceleration and torque shock. Determination of the intensity of the limit control in accordance with the friction can appropriately set the creep torque generated during creeping.

(9) As illustrated in Fig. 5E, the engine controller 1 determines a future gradient such that the limit gradient $dNe_{\_H}$ approaches zero as the actual rotation rate Ne of the engine 10 approaches the limit rotation rate $Ne_{LIM\_H}$. Through such setting, the actual rotation rate Ne can be intensely controlled within a range lower than or equal to the limit rotation rate $Ne_{LIM\_H}$ even if the actual rotation rate Ne suddenly increases at a fast rate and by a large value. If the actual rotation rate Ne increases at a slow rate and by a small amount, the rotation rate can be increased smoothly by relatively weak control. Thus, the revving-up of the actual rotation rate Ne can be suppressed, while the engine 10 can be started up at an appropriate actual rotation rate Ne.

(10) The correction-torque calculator 4g of the engine controller 1 calculates the torque correction value $Pi_{dNe\_H}$. The torque correction value $Pi_{dNe\_H}$ is the amount of torque that has to be reduced such that the future gradient of the actual rotation rate Ne is below or equal to the limit gradient $dNe_{\_H}$, and is obtained by converting the gradient difference $\Delta dNe$ to torque. The actual rotation rate Ne can be precisely changed along the gradient of the target value (limit gradient $dNe_{\_H}$) by performing torque-based control on the basis of such a torque converted value.

(11) The offset setter 4b of the limit-torque calculator 4 of the engine controller 1 determines the offset $\Delta Ne_{OFS}$ on the basis of the coolant temperature $W_{TS}$. For example, as defined in Condition 12, the offset $\Delta Ne_{OFS}$ is a parameter that determines the start condition of the limit control and is set to a large value at low coolant temperature $W_{TS}$. As a result, the limit control can be started quickly when the coolant temperature $W_{TS}$ is low, and the revving-up of the actual rotation rate Ne can be effectively suppressed. As illustrated in Fig. 5D, when the coolant temperature $W_{TS}$ is extremely low at start-up, the offset $\Delta Ne_{OFS}$ is set slightly small to delay the start of the limit control, enabling prior control of the start-up performance.

(12) Some vehicles having an AT unit 26 in which a torque converter 26a is installed keep the select lever at the D position when the engine 10 is in an idle-stop mode. In such a vehicle, torque shock might be imposed as the actual rotation rate Ne is revved up due to the restart of the engine 10 in an idle-stop mode with the select lever at the D position.

As illustrated in Figs. 5A and 5B, when the select lever is at the D position, the vehicle having the engine controller 1 determines the limit rotation rate $Ne_{LIM\_H}$ to a value smaller than the limit rotation rate $Ne_{LIM\_H}$ of when the select lever is at a position other than the D position. That is, when the engine torque can be input to the AT unit 26, the torque is intensely suppressed at start-up such that the revving-up of the actual rotation rate Ne is maintained at a low level. This control can effectively suppress the revving-up of the engine and reduce the fluctuation in the torque transmitted from the output shaft of the engine 10 to the AT unit 26 at start-up. Thus, unintentional acceleration of the vehicle can be reduced.

(13) During start-up of a typical engine, the pressure in the intake pipe is substantially equal to the atmosphere pressure although the throttle valve is not fully open; thus, the initial value of the cylinder intake rate of the air actually introduced to a cylinder corresponds to the air flow rate detected by the air-flow sensor when the throttle valve is fully open. That is, the cylinder intake rate immediately after start-up of the engine is higher than the flow rate detected by the air-flow sensor and gradually approaches the flow rate detected by the air-flow sensor as time advances.

In consideration of such fluctuation in the cylinder intake rate, the engine controller 1 determines whether the filtered value of the air intake rate $Q_{IN}$ is substantially equal to the estimated value of the cylinder intake rate, which is one of the end conditions of the limit control. For example, as illustrated in Figs. 6A and 6B, the limit control is performed until the estimated value of the cylinder intake rate (thick solid line) equals the filtered value detected by the air-flow sensor 34 (thin solid line). In this way, the revving-up of the engine can be effectively suppressed while the pressure in the intake pipe stabilizes at constant negative pressure.

**[5. Modifications]**

There are various modifications of the limit control performed in the engine 10 described above. For example, in the above-described embodiments, the limit-rotation-rate setter 4a determines the limit rotation rates $Ne_{LIM\_H}$ for the acceleration operation value $A_{PS}$, the brake-fluid pressure $B_{RK}$, and the coolant temperature $W_{TS}$, and then selects one of them for the final limit rotation rate $Ne_{LIM\_H}$. The procedure of determining a final limit rotation rate $Ne_{LIM\_H}$ is not limited thereto. The average of the limit rotation rates $Ne_{LIM\_H}$ for the acceleration operation value $A_{PS}$, the brake-fluid pressure $B_{RK}$, and the coolant temperature $W_{TS}$ may be determined as the final limit rotation rate $Ne_{LIM\_H}$, or functions of the limit rotation rates $Ne_{LIM\_H}$ may be defined to calculate the final limit rotation rate $Ne_{LIM\_H}$.

In the embodiments described above, limit control is integrated with the torque-based control performed with reference to the torque demanded for the engine 10 by the engine controller 1. Torque-based control, however, is not mandatory. So long as the limit of the actual rotation rate Ne is controlled in accordance with the start intention, acceleration corresponding to the start intention can be achieved while suppressing a sudden increase in the rotation rate of the engine (revving-up) that occurs immediately after start-up of the engine.

The idle-stop condition, the idling condition, the restart condition, and the start/stop condition of limit control according to the embodiments described above may be changed appropriately.

The embodiments above mainly describe the control performed at restart in an idle-stop mode. The limit control is not limited to such application and, for example, may be performed at manual start-up of the engine 10.

## REFERENCE SIGNS LIST

1 engine controller (start-up controller)
2 idle-stop controller
3 demand-torque calculator (second setter)
4 limit-torque calculator
4a limit-rotation-rate setter (first setter)
4b offset setter
4d limit-gradient calculator
4f gradient-difference calculator
5 target-torque calculator (limit controller, idling controller)
10 engine
26 automatic transmission unit (automatic transmission)
31 accelerator-pedal sensor (intention detector)
32 shift-position sensor (shift-position detector)
33 brake-fluid pressure sensor (intention detector)
34 air-flow sensor

The invention thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A start-up controller of an engine (10) transmitting a driving force to a wheel of a vehicle via an automatic transmission (26) installed in the vehicle, the start-up controller comprising:

a shift-position detector (32) that detects whether a position ($R_{NG}$) of a select lever of the automatic transmission (26) is in a driving range;
an idle-stop controller (2) that performs auto-stop control and auto-restart control of automatically stopping and restarting the engine (10) in accordance with a traveling state of the vehicle,
a first setter (4a) that determines a limit rotation rate ($Ne_{LIM\_H}$) based on the position ($R_{NG}$) detected by the shift-position detector (32) at start-up of the engine (10) as a limit of a rotation rate of the engine (10), the start-up of the engine (10) referring to start-up by the auto-restart control performed by the idle-stop controller (2), the limit rotation rate ($Ne_{LIM\_H}$) being lower when the position ($R_{NG}$) is in the driving range compared to when the position ($R_{NG}$) is not in the driving range; and
a limit controller (5) that performs limit control for controlling an actual rotation rate (Ne) of the engine such that the actual rotation rate (Ne) does not exceed the limit rotation rate ($Ne_{LIM\_H}$) determined by the first setter (4a) .

2. The start-up controller according to Claim 1, further comprising:

a second setter (3a) that determines a target idle rotation rate ($Ne_{OBJ}$) for idling of the engine (10),
wherein the first setter (4a) determines the limit rotation rate ($Ne_{LIM\_H}$) higher than or equal to the target idle rotation rate ($Ne_{OBJ}$) determined by the second setter (3a).

3. The start-up controller according to Claim 2, further comprising:
an idling controller (5) that performs idle feedback control for converging the actual rotation rate (Ne) of the engine (10) to the target idle rotation rate ($Ne_{OBJ}$) when a gradient of the actual rotation rate (Ne) of the engine (10) equals or falls below zero.

4. The start-up controller according to one of Claims 1 to 3, further comprising:

an intention detector (31, 33) that detects an intensity of an intention of a driver to start the vehicle,
wherein the first setter (4a) determines the limit rotation rate ($Ne_{LIM\_H}$) lower for the weaker start intention detected by the intention detector (31, 33).

5. The start-up controller according to Claim 4,
wherein the intention detector (31, 33) detects the intensity of the start intention based on braking operation performed by the driver.

6. The start-up controller according to Claim 4 or 5,
wherein the intention detector (31, 33) detects the intensity of the start intention based on acceleration operation performed by the driver.

7. The start-up controller according to one of Claims 1 to 6,
wherein the first setter (4a) determines the limit rotation rate ($Ne_{LIM\_H}$) based on a coolant temperature ($W_{TS}$) of the engine (10).

8. The start-up controller according to one of Claims 1 to 7,
wherein the limit controller (5) decreases a target value ($dNe_{\_H}$) of a rate of change (dNe) in the actual rotation rate (Ne) as a difference between the actual rotation rate (Ne) of the engine (10) and the limit rotation rate ($Ne_{LIM\_H}$) decreases.

9. The start-up controller according to one of Claims 1 to 8, further comprising:

an offset setter (4b) that determines an offset ($\Delta Ne_{OFS}$) of the rotation rate of the engine based on a coolant temperature ($W_{TS}$) of the engine (10) at start-up,
wherein the limit controller (5) determines, as a start condition of the limit control, whether the actual rotation rate (Ne) of the engine (10) is higher than or equal to a rotation rate equaling a difference between the limit rotation rate ($Ne_{LIM\_H}$) and the offset ($\Delta Ne_{OFS}$).

10. The start-up controller according to one of Claims 1 to 9, further comprising:

an air-flow sensor (34) that detects a flow rate ($Q_{IN}$) of air flowing through an intake pipe of the engine (10),
wherein the limit controller (5) determines, as an end condition of the limit control, whether an estimated value of a cylinder intake rate of air taken in a cylinder equals an air intake rate calculated based on the flow rate ($Q_{IN}$) detected by the air-flow sensor (34).

11. The start-up controller according to one of Claims 1 to 10, further comprising:

a limit-gradient calculator (4d) that calculates a limit gradient ($dNe_{\_H}$) of a rate of change (dNe) of the actual rotation rate (Ne) in accordance with a difference between the actual rotation rate (Ne) of the engine (10) and the limit rotation rate ($Ne_{LIM\_H}$) ; and
a gradient-difference calculator (4f) that calculates a gradient difference ($\Delta dNe$) corresponding to a difference between the limit gradient ($dNe_{\_H}$) calculated by the limit-gradient calculator (4d) and the rate of change (dNe) of the actual rotation rate (Ne),
wherein
the start-up controller performs torque-based control by converting various output requests to the engine (10) mounted in the vehicle to torque and controlling at least one of an air intake rate, a fuel injection rate, and ignition timing based on combined target torque, and
the limit controller (5) performs the limit control based on the target torque calculated based on a value obtained by converting the gradient difference ($\Delta dNe$) calculated by the gradient-difference calculator (4f) to torque.

**12.** The start-up controller according to one of Claims 1 to 11,
wherein the first setter (4a) determines a minimum value of the limit rotation rate ($Ne_{LIM\_H}$) based on the start intention detected by the intention detector (31, 33).

**Patentansprüche**

**1.** Startsteuergerät für einen Motor (10), der eine Antriebskraft über ein in einem Fahrzeug eingebautes Automatikgetriebe (26) auf ein Rad des Fahrzeugs überträgt, wobei das Startsteuergerät aufweist:

einen Schaltpositionsdetektor (32), der erfasst, ob eine Position ($R_{NG}$) eines Wählhebels des Automatikgetriebes (26) sich in einem Fahrbereich befindet;
eine Leerlauf-Stopp-Steuereinheit (2), die gemäß einem Fahrzustand des Fahrzeugs eine automatische Stoppsteuerung und eine automatische Neustartsteuerung zum automatischen Stoppen und Neustarten des Motors (10) ausführt; und
eine erste Einstelleinrichtung (4a), die eine Grenzdrehzahl ($Ne_{LIM\_H}$) basierend auf der durch den Schaltpositionsdetektor (32) beim Starten des Motors (10) erfassten Position ($R_{NG}$) als Grenzwert einer Drehzahl des Motors (10) erfasst, wobei das Starten des Motors (10) sich auf einen Start durch die automatische Neustartsteuerung bezieht, die durch die Leerlauf-Stopp-Steuereinheit (2) ausgeführt wird, wobei die Grenzdrehzahl ($Ne_{LIM\_H}$) für den Fall, dass sich die Position ($R_{NG}$) im Fahrbereich befindet, verglichen mit dem Fall, dass sich die Position ($R_{NG}$) nicht im Fahrbereich befindet, niedriger ist; und
eine Begrenzungssteuereinheit (5), die eine Begrenzungssteuerung zum Steuern einer Ist-Drehzahl (Ne) des Motors derart ausführt, dass die Ist-Drehzahl (Ne) die durch die erste Einstelleinrichtung (4a) bestimmte Grenzdrehzahl ($Ne_{LIM\_H}$) nicht überschreitet.

**2.** Startsteuergerät nach Anspruch 1, ferner mit:

einer zweiten Einstelleinrichtung (3a), die eine Soll-Leerlaufdrehzahl ($Ne_{OBJ}$) für einen Leerlauf des Motors (10) bestimmt,
wobei die erste Einstelleinrichtung (4a) die Grenzdrehzahl ($Ne_{LIM\_H}$) als größer oder gleich der durch die zweite Einstelleinrichtung (3a) bestimmten Soll-Leerlaufdrehzahl ($Ne_{OBJ}$) bestimmt.

**3.** Startsteuergerät nach Anspruch 2, ferner mit:
einer Leerlaufsteuereinheit (5), die eine Leerlaufrückkopplungssteuerung ausführt, um zu veranlassen, dass die Ist-Drehzahl (Ne) des Motors (10) gegen die Soll-Leerlaufdrehzahl ($Ne_{OBJ}$) konvergiert, wenn ein Gradient der Ist-Drehzahl (Ne) des Motors (10) kleiner oder gleich null ist.

**4.** Startsteuergerät nach einem der Ansprüche 1 bis 3, ferner mit:

einem Absichtsdetektor (31, 33), der eine Intensität einer Absicht eines Fahrers zum Starten des Fahrzeugs erfasst,
wobei die erste Einstelleinrichtung (4a) für eine durch den Absichtsdetektor (31, 33) erfasste schwächere Startabsicht eine niedrigere Grenzdrehzahl ($Ne_{LIM\_H}$) bestimmt.

**5.** Startsteuergerät nach Anspruch 4,
wobei der Absichtsdetektor (31, 33) die Intensität der Startabsicht basierend auf einer durch den Fahrer ausgeführten Bremsenbetätigung erfasst.

**6.** Startgerät nach Anspruch 4 oder 5,
wobei der Absichtsdetektor (31, 33) die Intensität der Startabsicht basierend auf einem durch den Fahrer ausgeführten Beschleunigungsvorgang erfasst.

**7.** Startgerät nach einem der Ansprüche 1 bis 6,
wobei die erste Einstelleinrichtung (4a) die Grenzdrehzahl ($Ne_{LIM\_H}$) basierend auf einer Kühlmitteltemperatur ($W_{TS}$) des Motors (10) bestimmt.

**8.** Startsteuergerät nach einem der Ansprüche 1 bis 7,
wobei die Begrenzungssteuereinheit (5) einen Sollwert ($dNe_{\_H}$) einer Änderungsrate (dNe) der Ist-Drehzahl (Ne) vermindert, wenn sich eine Differenz zwischen der Ist-Drehzahl (Ne) des Motors (10) und der Grenzdrehzahl $(Ne_{LIM\_H})$ vermindert.

9. Startsteuergerät nach einem der Ansprüche 1 bis 8, ferner mit:

einer Versatzeinstelleinrichtung (4b), die einen Versatz $(\Delta Ne_{OFS})$ der Drehzahl des Motors basierend auf einer Kühlmitteltemperatur $(W_{TS})$ des Motors (10) beim Starten bestimmt,
wobei die Begrenzungssteuereinheit (5) als eine Startbedingung der Begrenzungssteuerung bestimmt, ob die Ist-Drehzahl (Ne) des Motors (10) größer oder gleich einer Drehzahl ist, die einer Differenz zwischen der Grenzdrehzahl $(Ne_{LIM\_H})$ und dem Versatz $(\Delta Ne_{OFS})$ gleicht.

10. Startsteuergerät nach einem der Ansprüche 1 bis 9, ferner mit:

einem Luftdurchsatzsensor (34), der einen Durchsatz $(Q_{IN})$ von Luft erfasst, die durch ein Einlassrohr des Motors (10) strömt,
wobei die Begrenzungssteuereinheit (5) als eine Endbedingung der Begrenzungssteuerung bestimmt, ob ein Schätzwert einer Zylinderansaugrate von in einen Zylinder angesaugter Luft einer Luftansaugrate gleicht, die basierend auf dem durch den Luftdurchsatzsensor (34) erfassten Durchsatz $(Q_{IN})$ berechnet wird.

11. Startsteuergerät nach einem der Ansprüche 1 bis 10, ferner mit:

einer Grenzgradientenberechnungseinrichtung (4d), die einen Grenzgradienten $(dNe\__H)$ einer Änderungsrate (dNe) der Ist-Drehzahl (Ne) gemäß einer Differenz zwischen der Ist-Drehzahl (Ne) des Motors (10) und der Grenzdrehzahl $(Ne_{LIM\_H})$ berechnet; und
einer Gradientendifferenzberechnungseinrichtung (4f), die eine Gradientendifferenz $(\Delta dNe)$ berechnet, die einer Differenz zwischen dem durch die Grenzgradientenberechnungseinrichtung (4d) berechneten Grenzgradienten $(dNe\__H)$ und der Änderungsrate (dNe) der Ist-Drehzahl (Ne) entspricht,
wobei das Startsteuergerät eine drehmomentbasierte Steuerung durch Umwandeln verschiedener Ausgabeanforderungen an den im Fahrzeug montierten Motor (10) in ein Drehmoment und Steuern mindestens eines Parameters unter einer Luftansaugrate, einer Kraftstoffeinspritzrate und einem Zündzeitpunkt basierend auf einem kombinierten Solldrehmoment ausführt, und
die Begrenzungssteuereinheit (5) die Begrenzungssteuerung basierend auf dem Solldrehmoment ausführt, das basierend auf einem Wert berechnet wird, der durch Umwandeln der durch die Gradientendifferenzberechnungseinrichtung (4f) berechneten Gradientendifferenz $(\Delta dNe)$ in ein Drehmoment erhalten wird.

12. Startsteuergerät nach einem der Ansprüche 1 bis 11,
wobei die erste Einstelleinrichtung (4a) einen Minimalwert der Grenzdrehzahl $(Ne_{LIM\_H})$ basierend auf der durch den Absichtsdetektor (31, 33) erfassten Startabsicht bestimmt.

**Revendications**

1. Dispositif de commande de démarrage d'un moteur (10) transmettant une force d'entraînement à une roue d'un véhicule par l'intermédiaire d'une transmission automatique (26) installée dans le véhicule, le dispositif de commande de démarrage comprenant :

un détecteur de position de changement de vitesse (32) qui détecte si une position $(R_{NG})$ d'un levier de sélection de la transmission automatique (26) se trouve dans une plage d'entraînement ;
un dispositif de commande d'arrêt au ralenti (2) qui effectue une commande d'arrêt automatique et une commande de redémarrage automatique pour automatiquement arrêter et redémarrer le moteur (10) conformément à un état de déplacement du véhicule,
un premier dispositif de réglage (4a) qui détermine une vitesse de rotation limite $(Ne_{LIM\_H})$, sur la base de la position $(R_{NG})$ détectée par le détecteur de position de changement de vitesse (32) au démarrage du moteur (10), comme limite d'une vitesse de rotation du moteur (10), le démarrage du moteur (10) faisant référence au démarrage par la commande de redémarrage automatique effectuée par le dispositif de commande d'arrêt au ralenti (2), la vitesse de rotation limite $(Ne_{LIM\_H})$ étant plus faible lorsque la position $(R_{NG})$ se trouve dans la plage d'entraînement que lorsque la position $(R_{NG})$ ne se trouve pas dans la plage d'entraînement ; et
un dispositif de commande de limite (5) qui effectue une commande de limite pour commander une vitesse de rotation réelle (Ne) du moteur de sorte que la vitesse de rotation réelle (Ne) ne dépasse pas la vitesse de rotation limite ($Ne_{LIM\_H}$) déterminée par le premier dispositif de réglage (4a).

2. Dispositif de commande de démarrage selon la revendication 1, comprenant en outre :

   un deuxième dispositif de réglage (3a) qui détermine une vitesse de rotation au ralenti cible ($Ne_{OBJ}$) pour un ralenti du moteur (10),
   dans lequel le premier dispositif de réglage (4a) détermine que la vitesse de rotation limite ($Ne_{LIM\_H}$) est supérieure ou égale à la vitesse de rotation au ralenti cible ($Ne_{OBJ}$) déterminée par le deuxième dispositif de réglage (3a).

3. Dispositif de commande de démarrage selon la revendication 2, comprenant en outre :
   un dispositif de commande de ralenti (5) qui effectue une commande de rétroaction de ralenti pour faire converger la vitesse de rotation réelle (Ne) du moteur (10) vers la vitesse de rotation au ralenti cible ($Ne_{OBJ}$) lorsqu'un gradient de la vitesse de rotation réelle (Ne) du moteur (10) est inférieur ou égal à zéro.

4. Dispositif de commande de démarrage selon l'une des revendications 1 à 3, comprenant en outre :

   un détecteur d'intention (31, 33) qui détecte un degré d'une intention d'un conducteur de démarrer le véhicule,
   dans lequel le premier dispositif de réglage (4a) détermine que la vitesse de rotation limite ($Ne_{LIM\_H}$) est plus faible pour une plus faible intention de démarrage détectée par le détecteur d'intention (31, 33).

5. Dispositif de commande de démarrage selon la revendication 4,
   dans lequel le détecteur d'intention (31, 33) détecte le degré de l'intention de démarrage sur la base d'une opération de freinage effectuée par le conducteur.

6. Dispositif de commande de démarrage selon la revendication 4 ou 5,
   dans lequel le détecteur d'intention (31, 33) détecte le degré de l'intention de démarrage sur la base d'une opération d'accélération effectuée par le conducteur.

7. Dispositif de commande de démarrage selon l'une des revendications 1 à 6,
   dans lequel le premier dispositif de réglage (4a) détermine la vitesse de rotation limite ($Ne_{LIM\_H}$) sur la base d'une température du liquide de refroidissement ($W_{TS}$) du moteur (10).

8. Dispositif de commande de démarrage selon l'une des revendications 1 à 7,
   dans lequel le dispositif de commande de limite (5) diminue une valeur cible ($dNe_{\_H}$) d'un taux de variation (dNe) dans la vitesse de rotation réelle (Ne) à mesure qu'une différence entre la vitesse de rotation réelle (Ne) du moteur (10) et la vitesse de rotation limite ($Ne_{LIM\_H}$) diminue.

9. Dispositif de commande de démarrage selon l'une des revendications 1 à 8, comprenant en outre :

   un dispositif de réglage de décalage (4b) qui détermine un décalage ($\Delta Ne_{OFS}$) de la vitesse de rotation du moteur sur la base d'une température du liquide de refroidissement ($W_{TS}$) du moteur (10) au démarrage,
   dans lequel le dispositif de commande de limite (5) détermine, comme condition de démarrage de la commande de limite, si la vitesse de rotation réelle (Ne) du moteur (10) est supérieure ou égale à une vitesse de rotation égalant une différence entre la vitesse de rotation limite ($Ne_{LIM\_H}$) et le décalage ($\Delta Ne_{OFS}$).

10. Dispositif de commande de démarrage selon l'une des revendications 1 à 9, comprenant en outre :

    un capteur de débit d'air (34) qui détecte un débit ($Q_{IN}$) de l'air circulant à travers un tuyau d'admission du moteur (10),
    dans lequel le dispositif de commande de limite (5) détermine, comme condition de fin de la commande de limite, si une valeur estimée d'un taux d'admission dans un cylindre de l'air admis dans un cylindre est égale à un taux d'admission d'air calculé sur la base du débit ($Q_{IN}$) détecté par le capteur de débit d'air (34).

11. Dispositif de commande de démarrage selon l'une des revendications 1 à 10, comprenant en outre :

    un calculateur de gradient limite (4d) qui calcule un gradient limite ($dNe_{\_H}$) d'un taux de variation (dNe) de la vitesse de rotation réelle (Ne) conformément à une différence entre la vitesse de rotation réelle (Ne) du moteur (10) et la vitesse de rotation limite ($Ne_{LIM\_H}$) ; et

un calculateur de différence de gradient (4f) qui calcule une différence de gradient ($\Delta dNe$) correspondant à une différence entre le gradient limite ($dNe_{\_H}$) calculé par le calculateur de gradient limite (4d) et le taux de variation (dNe) de la vitesse de rotation réelle (Ne),

dans lequel le dispositif de commande de démarrage effectue une commande en fonction du couple en convertissant diverses requêtes de sortie au moteur (10) monté dans le véhicule en couple et commandant au moins l'un parmi un taux d'admission d'air, un taux d'injection de carburant et un calage d'allumage en fonction du couple cible combiné, et

le dispositif de commande de limite (5) exécute la commande de limite en fonction du couple cible calculé sur la base d'une valeur obtenue en convertissant la différence de gradient ($\Delta dNe$) calculée par le calculateur de différence de gradient (4f) en couple.

12. Dispositif de commande de démarrage selon l'une des revendications 1 à 11,

dans lequel le premier dispositif de réglage (4a) détermine une valeur minimale de la vitesse de rotation limite ($Ne_{LIM\_H}$) sur la base de l'intention de démarrage détectée par le détecteur d'intention (31, 33).

## FIG.1

Engine controller

Idle-stop controller ~2

demand-torque controller ~3

Limit-torque calculator ~4

Limit-rotation-rate setter ~4a

Offset setter ~4b

Rotation-rate-difference calculator ~4c

Limit-gradient calculator ~4d

Actual-rate calculator ~4e

Gradient-difference calculator ~4f

Correction-torque calculator ~4g

Actual-torque calculator ~4h

Limit-torque calculator ~4k

Referee ~4m

Target-torque calculator ~5

7~ Transmission ECU $E_{XT1}$

8~ Air-condition ECU $E_{XT2}$

9~ Electric-component ECU $E_{XT3}$

31~ $A_{PS}$

32~ $R_{NG}$

33~ $B_{RK}$

## FIG.2

# FIG.3

# FIG.4

## FIG.5A

Limit rotation rate
Ne$_{LIM\_H}$
(Second limit)

(High)

Except
"D" position

"D" position

(Low)

(Low)　　　　　　(High) $A_{PS}$ Acceleration
operation value

## FIG.5B

Limit rotation rate
Ne$_{LIM\_H}$
(Third limit)

(High)

Except
"D" position

"D"
position

(Low)

(Low)　　　　　　(High) $W_{TS}$ Coolant
temperature

## FIG.5C

Limit rotation rate
Ne$_{LIM\_H}$
(First limit)

(high)

(Low)

(Low)　　　　　(High) $B_{RK}$ Brake-fluid
pressure

## FIG.5D

Offset
$\Delta$Ne$_{OFS}$

(High)

(Low)

(Low)　　　　　(High) $W_{TS}$ Coolant
temperature

## FIG.5E

Limit gradient
dNe$_H$

(High)

(Low)　　　　　0　　　　(High)

Rotation-rate
difference
$\Delta$Ne

(Low)

## FIG.6A

Air intake rate
(High)

Limit control
in action
up to here ⟹

0 ──────────────────────── Time

## FIG.6B

Air intake rate        Limit control
(High)                   in action
up to here ⟹

0 ──────────────────────── Time

## FIG.7

5

Target-torque calculator

$Pi_{LIM\_H}$

$Pi_{\_EXT}$

$Pi_{\_APS}$

$Pi_{\_NeFB}$

$Pi_{\_EXT\_SA}$

Air-control selector
5a

Air-control limiter
5b

Intake-lag corrector
5c

First ignition-control limiter
5d

Second ignition-control limiter
5e

Ignition-control selector
5f

$Pi_{\_ETV\_STD}$
Air-control target torque

$Pi_{\_TGT}$
Ignition-control target torque

# FIG.8A

Actual rotation rate
Ne

(High)

Limit control    Idle feedback control

Ne$_{LIM\_H}$

Target idle
rotation rate
Ne$_{OBJ}$

Time

t$_0$    t$_1$ t$_2$    t$_3$  t$_4$

# FIG.8B

Target torque

(High)

Maximum torque Pi$_{MAX}$

Pi$_{LIM\_H}$

0    t$_0$    t$_1$ t$_2$    t$_3$  t$_4$    Time

# FIG.8C

Ignition timing

(Advance)

Retarded

(Retard)

Time

t$_0$    t$_1$ t$_2$    t$_3$  t$_4$

# FIG.9A

Brake-fluid pressure
$B_{RK}$

(High)

0       $t_A$    $t_B$    $t_C$      Time

# FIG.9B

Actual
rotation rate
Ne

(High)    $t_A$     $t_B$    $t_C$    $Ne_{LIM\_H}$

$Ne_{OBJ}$

Limit
control

$t_A\ t_5\ t_6$       $t_7$    Time

## FIG.10A

Brake-fluid pressure $B_{RK}$

(High)

0

$t_D$  $t_E$

Time

## FIG.10B

Acceleration operation value $A_{PS}$

(High)

0

$t_D$  $t_E$  $t_F$  $t_G$

Time

## FIG.10C

Actual rotation rate $Ne$

$Ne_{LIM\_H}$

(High)

$t_D$  $t_E$  $t_F$  $t_G$

$Ne_{OBJ}$

Limit control

$t_D$  $t_8$  $t_9$  $t_{10}$

Time

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006152965 A
- JP 2000274273 A
- JP 2004324531 A